(19) **Europäisches Patentamt**
**European Patent Office**
**Office européen des brevets**

(11) **EP 1 335 999 B1**

(12) # EUROPÄISCHE PATENTSCHRIFT

(45) Veröffentlichungstag und Bekanntmachung des Hinweises auf die Patenterteilung:
**01.07.2009 Patentblatt 2009/27**

(21) Anmeldenummer: **01976292.1**

(22) Anmeldetag: **09.10.2001**

(51) Int Cl.:
*D01D 5/24* *(2006.01)*       *D01D 5/00* *(2006.01)*
*D04H 1/42* *(2006.01)*       *D04H 1/74* *(2006.01)*
*D04H 3/00* *(2006.01)*       *D04H 3/04* *(2006.01)*
*D04H 3/16* *(2006.01)*

(86) Internationale Anmeldenummer:
**PCT/EP2001/011661**

(87) Internationale Veröffentlichungsnummer:
**WO 2002/034986 (02.05.2002 Gazette 2002/18)**

(54) **ORIENTIERTE MESO- UND NANORÖHRENVLIESE**

ORIENTED MESOTUBULAR AND NANTOTUBULAR NON-WOVENS

NON-TISSES CONSTITUES DE MESOTUBES ET DE NANOTUBES ORIENTES

(84) Benannte Vertragsstaaten:
**AT BE CH CY DE DK ES FI FR GB GR IE IT LI LU MC NL PT SE TR**

(30) Priorität: **26.10.2000 DE 10053263**

(43) Veröffentlichungstag der Anmeldung:
**20.08.2003 Patentblatt 2003/34**

(73) Patentinhaber: **Transmit Gesellschaft für Technologietransfer mbH**
**35394 Giessen (DE)**

(72) Erfinder:
• **HOU, Haoqing**
**JX 330027 (CN)**
• **AVERDUNG, Johannes**
**45894 Gelsenkirchen (DE)**
• **CZADO, Wolfgang**
**95479 Gefrees (DE)**
• **GREINER, Andreas**
**35287 Amöneburg (DE)**
• **WENDORFF, Joachim, H.**
**64569 Nauheim (DE)**

(74) Vertreter: **Buchhold, Jürgen et al**
**Patentanwaltskanzlei**
**Olbricht & Buchhold**
**Am Weinberg 15**
**35096 Niederweimar / Lahn (DE)**

(56) Entgegenhaltungen:
WO-A-01/09414          DE-A- 2 543 149
US-A- 4 143 196

• **PATENT ABSTRACTS OF JAPAN vol. 015, no. 392 (C-0873), 4. Oktober 1991 (1991-10-04) & JP 03 161563 A (I C I JAPAN KK), 11. Juli 1991 (1991-07-11)**

**Beschreibung**

Die Erfindung betrifft orientierte Vliese aus Meso- und Nanoröhren, d. h. Vliese bei denen die Röhren oder Hohlfasern mit einem Innendurchmesser im nano- bis mikrometer-Bereich vorzugsweise in einer Richtung orientiert sind, Verfahren zu deren Herstellung und die Verwendung dieser Vliese.

Als Vliese werden allgemein lockere Materialien bzw. Flächengebilde aus textilen oder nichttextilen Spinn-, Hohlfasern, oder Filamenten, deren Zusammenhalt durch die den Fasern eigene Haftung gegeben ist, bezeichnet.

Als orientierte Vliese (vgl. DIN 61210, 1982, S2), werden Vliese bezeichnet, bei denen die Spinn-, Hohlfasern, oder Filamente vorzugsweise in einer Richtung orientiert sind.

Vliese sind bekannt und werden u. a. für textile Anwendungen z. B. für Windeln und Hygieneartikel, Schutzkleidung im medizinischen Sektor und in der Reinstraumtechnik sowie für die Filtration von Gasen und Flüssigkeiten eingesetzt (s. Kirk-Othmer, Encyclopedia of Chemical Technology, 4 Ed. Vol 17, S. 303-368 u. Ullmann's Encyclopedia of Industrial Chemistry. 5 Ed. Vol. A17, S.565-587).

Als Hohlfasern, Meso- oder Nanoröhren werden allgemein Röhren mit einem Innendurchmesser von unter 0.1 mm bezeichnet.

Röhren oder Hohlfasern mit kleinem Innendurchmesser sind bekannt und werden insbesondere für Trennzwecke z. B. in der medizinischen Dialyse, für die Gasseperation oder Osmose von wäßrigen Systemen, z. B. zur Wasseraufbereitung eingesetzt (s. Kirk Othmer, Encyclopedia of Chemical Technology, 4 Ed. Vol 13, S. 312-313). Das Fasermaterial besteht meist aus Polymeren, die darüber hinaus Poren, d. h. Eigenschaften von semipermeablen Membranen besitzen können. Die zu Trennzwecken verwendeten Hohlfasern weisen meist eine Oberfläche von 100 cm$^2$ pro cm$^3$ Volumen mit einem Innendurchmesser von 75 $\mu$m bis 1 mm auf.

Eine weitere Anwendung von Hohlfasern ist die Mikroelektronik. Hier werden supraleitende, ca. 60 $\mu$m im Durchmesser betragende Fasern aus supraleitendem Material hergestellt, indem Hohlfasern aus Polymeren mit einer Masse gefüllt werden, die nach thermischem Abbau des Polymeren supraleitende Eigenschaften besitzt (J.C. W. Chien, H. Ringsdorf et al., Adv. Mater., 2 (1990) S. 305).

Röhren mit kleinem Innendurchmesser werden in der Regel durch Extrusionsspinnverfahren hergestellt; eine Reihe von Extrusionsspinnverfahren sind in Kirk-Othmer, Encyclopedia of Chemical Technology, 4. Ed. Vol. 13, S. 317-322 beschrieben.

Mit Hilfe von Extrusionsspinnverfahren können Hohlfasern mit einem Innendurchmesser von bis zu 2 $\mu$m hergestellt werden. Die Herstellung von Hohlfasern mit kleineren Innendurchmessern ist mit diesen Verfahren nicht möglich.

Zur Herstellung von sehr dünnen Fasern ohne Hohlraum kann die Elektrospinning-Technik (Electrostatic Spinning) eingesetzt werden. Hier werden Polymerschmelzen oder Polymerlösungen in einem elektrischen Feld durch Kanülen unter einem geringen Druck extrudiert. Grundlagen dieser Technik können z. B. in EP-A1 0 005 035, EP-A1 0 095 940. US-B2 5 024 789 oder WO-A1 91/01695 nachgeschlagen werden.

Bei der Herstellung von Fasern mit kleinem Durchmesser mit Hilfe der Elektrospinning-Technik werden Faservliese aus isotrop orientierten einzelnen Fasern gebildet, bei denen die Fasern zufällig verteilt jede beliebige Richtung einnehmen (L. Huang, R. A. McMillan et al., Macromolecules, 33, (2000), S. 2989-2997, Sharzad Zarkoob, Darcell H. Reneker et al. Polymer. Prep., 39 (1998) S. 244.245).

Mit Hilfe des Elektrospinningverfahrens können massive Fasern mit einem Durchmesser von 10 - 3000 nm hergestellt werden; die Herstellung von Hohlfasern ist jedoch auch mit dieser Technik nicht möglich.

Röhrenförmige Produkte wie Gefäßimplantate mit einem Mantel aus einem Vlies aus elastischen Nanofasern und Röhrendurchmessern im mm-Bereich können mit der Elektrospinningtechnik durch Sammlung der Fasern auf einer rotierenden Drehspindel erzeugt werden (US-B2 5 024 789). Bei dieser Technik beobachtet man ebenfalls, dass Fasern mit einem Durchmesser kleiner gleich 1 $\mu$m zufällig orientiert abgeschieden werden. Werden nach einem ähnlichen Verfahren Nanofasern aus Polybenzimidazol beim Elektrospinning-Prozess auf einem rotierenden Zylinder abgeschieden, so erhält man Faservliese deren Festigkeit in Wickelrichtung darauf hindeutet, dass mehr Fasern in jene Richtung liegen. Die Rasterelektronenmikroskopische Untersuchung zeigt jedoch, das auch solche Vliese überwiegend aus zufällig verteilten, einzelnen Fasern bestehen (J.-S. Kim, D. H. Reneker, Polym. Eng. Sci., 39, (1999), S. 849-853).

US-B2 4 689 186 beschreibt einen Elektrospinningprozess zur Erzeugung von röhrenförmigen Produkten bei dem mit Hilfe einer Hilfselektrode ein Teil der Fasern in gestrecktem Zustand in Richtung das Kreisumfangs orientiert abgelegt werden soll, so dass nach Entfernung der Drehspindel durch Zusammenziehen des gespannten Fasermantels ein kleinerer Durchmesser der Röhre erzielt wird. Die Herstellung von flächigen orientierten Faservliesen ist mit dieser Technik jedoch nicht möglich.

Orientierung im Sinne der Erfindung bezieht sich auf die Lage einer Faser in Bezug auf die Lage einer anderer Faser und nicht auf die molekulare Orientierung der Makromoleküle innerhalb einer einzelnen elektrostatisch gesponnenen Faser. Elektrostatisch gesponnene Fasern können zueinander unorientiert vorliegen, obwohl sie eine molekulare Orientierung beispielsweise parallel zur Faserachse aufweisen (C. J. Buchko, L. C. Chen et al., Polymer 40 (1999) S. 7397 7407).

Die Orientierung von Fasern in einer planaren Anordnung kann durch den Orientierungsparameter $f_p = [2\langle\cos^2\varnothing\rangle$ - 1] beschrieben werden (S.H. McGee, R. L. McCullough, J. Appl. Phys. 55, 1984, S. 1394-14039). $\langle\cos^2\varnothing\rangle$ entspricht

$$\langle\cos^2\varnothing\rangle = \left[\sum_j N(\varnothing_j)\cos^2\varnothing_j\right]/N_{total}$$

Bestimmt wird die Lage von Fasern in Bezug auf eine vorgegebene Achse. $\varnothing$ bezeichnet den Winkel zu dieser Vorzugsachse. $N$ entspricht der Zahl der Fasern in den jeweiligen Winkelklassen $\varnothing_j$, $N_{total}$ der Gesamtzahl der gemessenen Fasern.

Der Orientierungsparmeter $f_p$ nimmt die Werte zwischen +1 und 0 ein. Wenn alle Fasern parallel zur einer Vorzugsrichtung orientiert sind, gilt $f_p$ = 1, bei einer statistischen, zufälligen Verteilung gilt f = 0.

Hohlfasern mit einem sehr kleinen Innendurchmesser sind bisher nur durch elektrochemische Synthese, so beschrieben in L. A. Chernozantonskii, Chem. Phys. Lett. 297, 257, (1998), durch die Methoden der Supramolekularen Chemie (S. Demoustier - Champagne et al., Europ. Polym. J. 34, 1767, (1998)) oder mit selbst-organisierenden Membranen als Template (E. Evans et al. Science, Vol 273, 1996, S. 933-995) zugänglich. Carbonhohlfasern auf Basis der Fullerenchemie (Kohlenstoff-Nanoröhrchen) mit ein- und mehrwandigen Strukturen aus einer einzelnen aufgerollten Graphitschicht (Schicht aus allseitig aneinander kondensierten Kohlenstoff-Sechsringen) oder konzentrisch ungeordneten Graphitzylindern sind z. B. in "Fullerenes and related Structures", Ed. A. Hirsch, Springer Verlag 1999, S. 189-234 oder N. Grobert, Nachr. Chem. Tech. Lab., 47, (1999), 768-776 beschrieben.

Diese Methoden sind jedoch nur auf speziell Materialien anwendbar und können zur Herstellung von technisch verwertbaren, d. h. mechanisch und chemisch stabilen Hohlfasern nicht eingesetzt werden.

Für viele Anwendungen z. B. bei der Trennung von Gasen ist es zweckmäßig Hohlfasern mit kleinen Außenund/oder Innendurchmessern aus verschiedenen, auf das jeweilige Einsatzgebiet abgestimmten Materialien einzusetzen. Insbesondere sollen die Materialien thermisch, mechanisch und chemisch belastbar sein, gegebenenfalls eine poröse Struktur aufweisen, wahlweise elektrische Leiter oder Isolatoren sein und aus Polymeren, Anorganika oder Metallen bestehen. Entsprechende Hohlfasern mit einem Innendurchmesser von 10 nm bis 50 $\mu$m aus technisch anwendbaren Materialien wie Polymeren, Anorganika oder sogar Metallen und ein Verfahren zu deren Herstellung sind beschrieben in DE-A1 100 23 456.

Die in DB-A1 100 23 456 beschriebenen Hohlfasern weisen bevorzugt Innendurchmesser von 50 nm bis 20 $\mu$m, besonders bevorzugt 100 nm bis 5 $\mu$m, ganz besonders bevorzugt 100 nm bis 2 $\mu$m, bzw. 100 nm bis 1 $\mu$m, 500 nm bis 1 $\mu$m, 10 nm bis 1 $\mu$m oder 100 nm bis 500 nm auf.

Die Länge der Hohlfasern ist vom Verwendungszweck bestimmt und beträgt in der Regel 50 $\mu$m bis zu mehreren mm oder cm.

Die Wandstärke, d. h. die Dicke der Außenwände der Hohlfasern ist variabel und beträgt in der Regel 10 bis 5000 nm, bevorzugt 10 bis 1000 nm, besonders bevorzugt 10 bis 250 nm.

Hohlfasern gemäß DE-A1 100 23 456 weisen neben den sehr kleinen Innendurchmessern eine Reihe von Eigenschaften auf, die sie für eine Verwendung in den Bereichen Medizin, Elektronik, Katalyse, chemische Analytik, Gasseparation, Osmose oder der Optik geeignet machen.

So können die Außenwände der erfindungsgemäßen Hohlfasern aus den unterschiedlichsten Materialien aufgebaut sein, wie zum Beispiel aus Polymeren, Metallen oder metallhaltigen anorganischen Verbindungen. Die Außenwände können eine Schicht dieser Materialien aufweisen, d. h. vollständig aus diesen bestehen oder mehrere Schichten aus den gleichen oder unterschiedlichen Materialien besitzen. Der sehr kleine Innendurchmesser sorgt für ein sehr hohes Verhältnis von Oberfläche zum Volumen der Hohlfasern.

Das Verfahren zur Herstellung den gemäß DE-A1 100 23 456 kann ausgeübt werden, indem eine Faser aus einem ersten, abbaubaren Material mindestens eine Beschichtung aus mindestens einem weiteren Material erhält und anschließend das erste Material mit der Maßgabe abgebaut wird, dass die so erhaltene Hohlfaser einen Innendurchmesser von 10 nm bis 50 $\mu$m aufweist.

In einer Verfahrensvariante gemäß DE-A1 100 23 456 wird zunächst eine Faser aus einem ersten, abbaubaren Material beschichtet. Diese Faser kann aus einem thermisch, chemisch, strahlenchemisch, physikalisch, biologisch, mit Plasma, Ultraschall oder durch Extraktion mit einem Lösungsmittel abbaubaren Material bestehen. Zur Herstellung dieser Fasern kann die Elektrospinning-Technik eingesetzt werden.

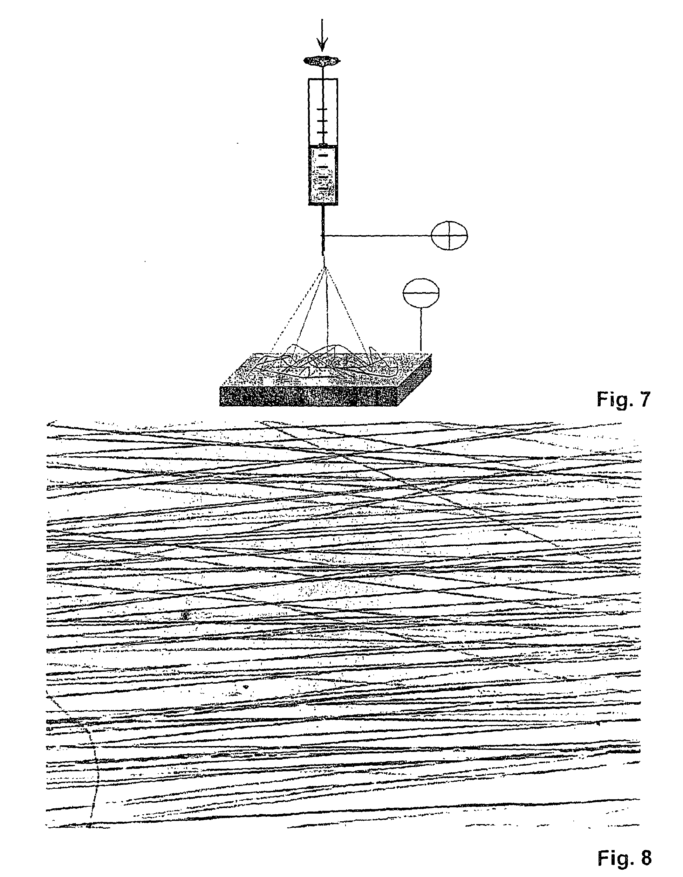

Details zur Elektrospinning-Technik können z. B. in D. H. Reneker, I. Chun., Nanotechn. 7 216 (1996) nachgelesen werden. Der prinzipielle Aufbau einer Elektrospinning-Apparatur ist Fig. 7 zu entnehmen.

Die WO-A1 01/09414 beschreibt Mcso- oder Nanoröhren (Hohlfasern) mit einem Innendurchmessern von 10 nm bis 50 $\mu$m und ein Verfahren zu deren Herstelleung. Dabei werden die Hohlfasern durch die Beschichtung von abbaubaren Materialien mit nichtabbaubaren Materialien hergestellt, indem die abbaubaren Materialien beispielsweise durch thermische Verfahren zerstört werden. WO-A1 97/26225 offenbart Mikrohohlfasern mit einer Wandstärke von 0,01 bis 15 $\mu$m und einem Außendurchmesser von 0,5 bis 35 $\mu$m. Die Mikroholfasern sind aus keramischem Material und werden durch ein Verfahren hergestellt, bei dem eine Dispersion, die den Vorläufer eines keramischen Materials und ein unter Hitzeeinwirkung entfernbares Bindemittel enthält. Diese Dispersion wird zu sogenannten grünen Mikrohohlfasern ausgeformt. Im Anschluss wird das Bindemittel gegebenenfalls unter Hitzeeinwirkung entfernt. In beiden Fällen (WO-A1 01/09414 und WO-A1 97/26225) können aus den beschriebenen Hohlfasern Vliese hergestellt werden. In diesen Vliesen nehmen die Hohlfasern jedoch statistisch jede beliebige Richtung ein.

Für viele Anwendungen z. B. bei der Trennung von Gasen wäre es erwünscht, orientierte Hohlfaservliese, bei denen die Hohlfasern mit kleinem Außen- und/oder Innendurchmessern vorzugsweise in eine Richtung (Längsvliese) orientiert sind, einzusetzen.

Aufgabe der vorliegenden Erfindung war es daher, orientierte Hohlfaservliese aus Hohlfasern mit einem Innendurchmesser im nm bis $\mu$m-Bereich bereitzustellen.

Gegenstand der vorliegenden Erfindung sind Hohlfaservliese gemäß Anspruch 1, die Hohlfasern mit einem Innendurchmesser von 10 nm bis 50 $\mu$m und einer Außenwand, aufgebaut aus metallhaltigen anorganischen Verbindungen, Polymeren und/oder Metallen, aufweisen, und dadurch gekennzeichnet sind, dass die das Hohlfaservlies bildenden Hohlfasern vorzugsweise in eine Richtung orientiert sind.

Die erfindungsgemäßen Hohlfaservliese können vorteilhaft in der Separation z.B. von Gasen, in katalytischen Systemen und als Baustein von Mikroreaktoren eingesetzt werden, da diese Vliese gerichtete Kanäle mit definiertem Innendurchmesser aufweisen.

Die Orientierung von Fasern in einer planaren Anordnung kann durch den Orientierungsparameter $f_p = [2\langle \cos^2 \varnothing \rangle - 1]$ beschrieben werden (S.H. McGee, R. L. McCullough, J. Appl. Phys. 55, 1984, S. 1394-14039). $\langle \cos^2 \varnothing \rangle$ entspricht

$$\langle \cos^2 \varnothing \rangle = \left[ \sum_j N(\varnothing_j) \cos^2 \varnothing_j \right] / N_{total}$$

Bestimmt wird die Lage von Fasern in Bezug auf eine vorgegebene Achse. $\varnothing$ bezeichnet den Winkel zu dieser Vorzugsachse. $N$ entspricht der Zahl der Fasern in den jeweiligen Winkelklassen $\varnothing_j$, $N_{total}$ der Gesamtzahl der gemessenen Fasern.

Der Orientierungsparameter $f_p$ nimmt die Werte zwischen +1 und 0 ein. Wenn alle Fasern parallel zu einer Vorzugsrichtung orientiert sind, gilt $f_p = 1$, bei einer statistischen, zufälligen Verteilung gilt f = 0.

Die erfindungsgemäßen Hohlfaservliese weisen bevorzugt einen Orientierungsgrad fp von 0.2 bis 1, besonders bevorzugt von 0.5 bis 1, ganz besonders bevorzugt von 0.6 bis 1, 0.7 bis 1, 0.8 bis 1, 0.9 bis 1 oder 0.6 bis 0.9 auf.

Der Orientierungsgrad kann auch durch eine Standardabweichung [°] der Lage der Fasern in Bezug zu einer Vorzugsrichtung charakterisiert werden. Unordnung, also eine beliebige, zufällige Orientierung liegt bei einer Standardabweichung von ca. 52 vor. Im Idealfall, bei welchem alle Fasern gleich orientiert sind, beträgt die Standardabweichung 0.

Die Hohlfasern der erfindungsgemäßen orientierten Hohlfaservliese weisen bevorzugt Innendurchmesser von 50 nm bis 20 $\mu$m, besonders bevorzugt 100 nm bis 5 $\mu$m, ganz besonders bevorzugt 100 nm bis 2 $\mu$m, bzw. 100 nm bis 1 $\mu$m, 500 nm bis 1 $\mu$m, 10 nm bis 1 $\mu$m oder 100 nm bis 500 nm auf.

Die Länge der Hohlfasern ist vom Verwendungszweck bestimmt und beträgt in der Regel 50 $\mu$m bis zu mehreren mm oder cm.

Die Wandstärke, d. h. die Dicke der Außenwände der Hohlfasern ist variabel und beträgt in der Regel 10 bis 5000 nm, bevorzugt 10 bis 1000 nm, besonders bevorzugt 10 bis 250 nm.

Weiterhin ist ein Verfahren zur Herstellung der orientierten Hohlfaservliese gemäß Anspruch 9 Gegenstand der vorliegenden Erfindung.

Das Verfahren zur Herstellung der erfindungsgemäßen orientierten Hohlfaservliese, die Hohlfasern mit einer Außenwand, aufgebaut aus metallhaltigen anorganischen Verbindungen, Polymeren und/oder Metallen, aufweisen, kann ausgeübt werden, indem erst ein Faservlies aus vorzugsweise in einer Richtung orientierten Fasern aus einem ersten abbaubaren Material erzeugt wird, dieses orientierte Faservlies mindestens eine Beschichtung aus einen metallhaltigen anorganischen Verbindung, Polymeren und/oder Metallen erhält und anschließend das erste Material mit der Maßgabe abgebaut wird, dass die Hohlfasern des so erhaltenen Hohlfaservlieses mit einen Innendurchmesser von 10 nm bis 50 $\mu$m vorzugsweise in eine Richtung orientiert sind, wobei die Hohlfasern einen Orientierungsgrad von fp 0.2 bis 1 aufweisen

Die vorzugsweise in einer Richtung orientierten Fasern des Faservlieses aus einem ersten abbaubaren Material können aus einem thermisch, chemisch, strahlenchemisch, physikalisch, biologisch, mit Plasma, Ultraschall, Mikrowellen oder durch Extraktion mit einem Lösungsmittel abbaubaren Material bestehen.

Zur Herstellung dieser orientierten Faservliese aus einem ersten, abbaubaren Material kann überraschenderweise die bekannte Elektrospinning-Technik eingesetzt werden, bei welcher eine Polymerlösung oder Schmelze in einem Hochspannungsfeld zwischen einer Düse und einer Gegenelektrode versponnen wird (Fig. 7). Weitere Details zur Elektrospinning-Technik können z. B. in D. H. Reneker. I. Chun., Nanotechn. 7 216 (1996) nachgelesen werden.

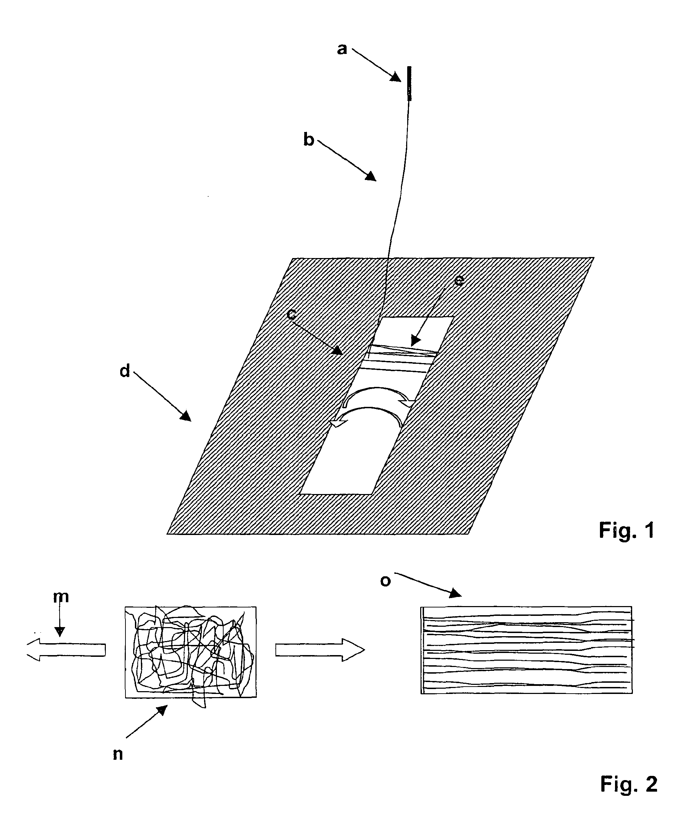

In einer besonders bevorzugten Ausführungsform des erfindungsgemäßen Verfahrens wird ein, beispielsweise rechtwinkliger Rahmen aus einem leitfähigen Material in den Raum zwischen Düse und Gegenelektrode gebracht (Fig. 1), auf dem die Fasern abgeschieden werden. Vermutlich erfolgt die Orientierung innerhalb des Verfahrens nach folgendem Mechanismus. Die Fasern werden zunächst auf einem Rahmenteil abgeschieden. Da die Fasern dadurch die Abscheidungstelle isolieren, kann die von den Fasern transportierte Ladung nicht abfließen, es entsteht eine abstoßende Ladungskonzentration an dieser Stelle und der Polymerlösungsstrahl (Jet), aus dem die Fasern hervorgehen, springt zu einer anderen Stelle des Rahmens. Dabei werden die Fasern linear zwischen den Sprungstellen angeordnet. An der neuen Abscheidungstelle des Jets kommt es erneut zu einer Isolation mit nachfolgender Ladungskonzentration, so dass der Jet erneut springt. Dieser Vorgang wiederholt sich kontinuierlich und führt zu einer linearen Abscheidung der Fasern zwischen den Rahmenschenkeln, so dass die Fasern vorzugsweise in eine Richtung orientiert werden.

In einher weiteren Variante wird zunächst ein Faservlies aus einem ersten, abbaubaren Material mit Hilfe der in DE-A1 100 23 456 beschriebenen Elektrospinning-Technik hergestellt. Die beliebig verteilten Fasern des ungeordneten Faservlieses können anschließend durch Verstrecken vorzugsweise in eine Richtung ausgerichtet werden, so das man ein orientiertes Faservlies erhält (Fig.2).

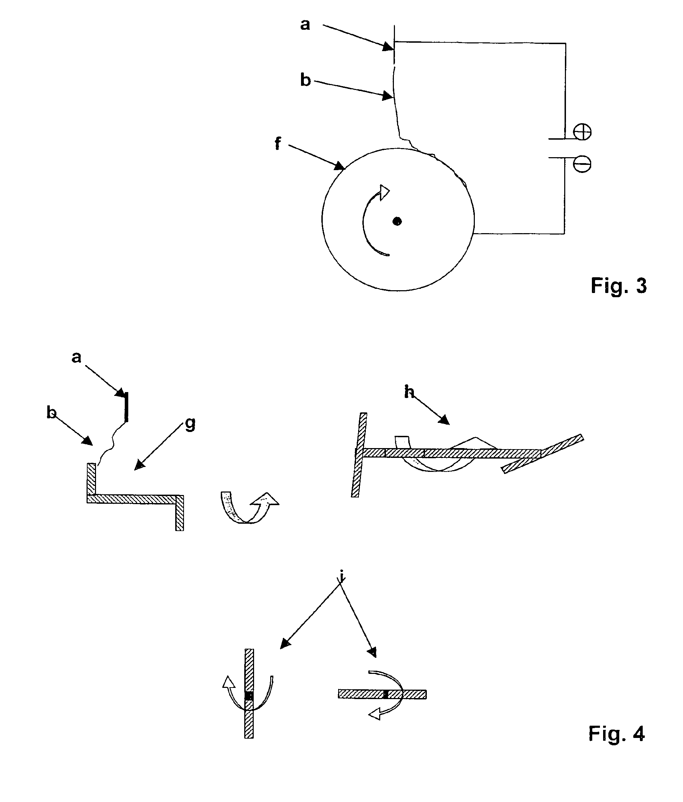

Weiterhin ist es möglich, orientierte Faservlieses mit Hilfe der Elektrospinning-Technik herzustellen, in dem man die Fasen aus einem ersten abbaubaren Material auf einer leitfähigen, rotierenden Trommel als Gegenelektrode, an der Hochspannung anliegt, abscheidet. Dabei hängt es vom Durchmesser und der Drehfrequenz des Trommel ab, ob die Fasern in einer zufälligen Orientierung oder vorzugsweise in eine Richtung orientiert abgeschieden werden (Fig. 3).

Orientierte Faservliese können auch durch Elektrospinning-Technik mit Hilfe von mechanisch oder elektrisch erzeugten Hochspannungswechselfeldern erzeugt werden.

In einer Variante werden die Fasern an einer rotierenden, hakenförmigen Elektrode (Fig. 4) linear zwischen den rotierenden Haken in einer Vorzugsrichtung orientiert abgeschieden. Da das elektrische Feld zwischen dem der Düse, nächsten Elektrodenteil am stärksten ist, springt dieses Feldmaxima bei Rotation der Elektrode ständig zwischen dem linken und rechten Haken hin und her. Die Frequenz ist dabei durch die Rotationsgeschwindigkeit einstellbar. Da der Jet dem Feldmaxima folgt, werden die Fasern zwischen den Elektroden abgelegt. Statt einer Hakenelektrode können vorteilhaft auch Doppelhakenelektroden oder zwei sich synchron drehend, stabförmige Elektroden verwendet werden (Fig. 4).

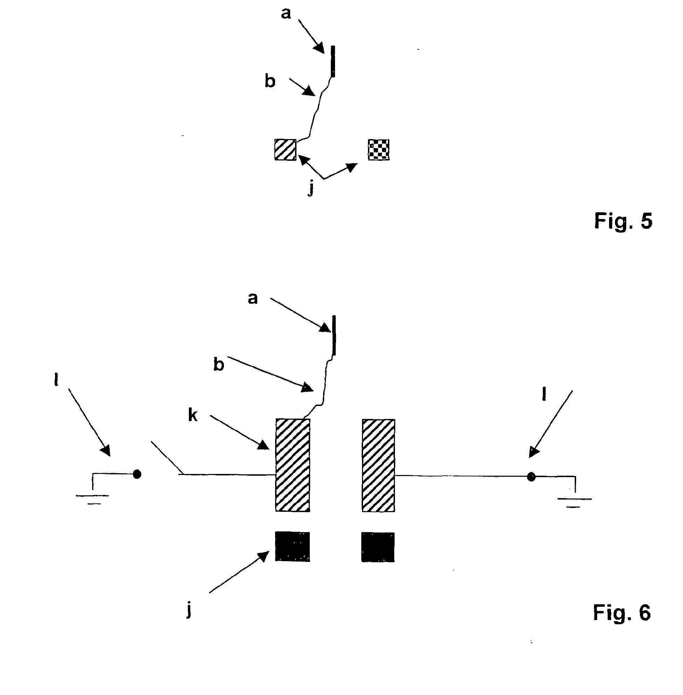

In einer weiteren Variante wird beim Elektrospinningprozess durch eine Wechselhochspannung an zwei Gegenelektroden das elektrische Feld ständig zwischen den Elektroden hin und her geschaltet und somit auch der Jet, der nur in einem starken elektrischen Feld entstehen kann und diesem folgt (Fig. 5). Die Fasern werden linear und in eine Vorzugsrichtung orientiert zwischen den Elektroden abgeschieden. Typischerweise liegt die Potentialdifferenz zwischen den Gegenelektroden gegenüber der Potentialdifferenz Düse-Gegenelektroden in einer ähnlichen Größenordnung, da ansonsten auf beiden Gegenelektroden gleichzeitig Fasern abgeschieden werden.

Es ist weiterhin möglich, Fasern linear und in eine Vorzugsrichtung orientiert bei einem geringen Potentialunterschied, beispielsweise von 200 V, zwischen zwei Gegenelektroden abzuscheiden, indem man durch alternierendes Abklemmen der Gegenelektroden jeweils die Erdung aufhebt. An der ungeerdeten Gegenelektrode bricht jeweils das Feld zusammen, so dass nur an der geerdeten Gegenelektrode eine Abscheidung von Fasern erfolgt. Durch eine alternierende Ansteuerung der Elektroden erhält man eine lineare Abscheidung von orientierten Fasern zwischen den Gegenelektroden. In einer Variante wird das Potential beider Gegenelektroden auf 0 gesenkt und die Geegenelektroden wechselnd geerdet und abgeklemmt. Die Fasern werden ebenfalls linear zwischen den Elektroden abgelegt; man erhält ein orientiertes Faservlies.

Weiterhin können orientierte Faservliese erzeugt werden, wenn beim Elektrospinnprozess in den Raum zwischen Düse und Gegenelektrode zwei Zwischenelektroden, typischerweise Metallstäbe, angeordnet und alternierend geerdet werden (Fig. 6). In den Raum zwischen Düse und Gegenelektrode plazierte Zwischenelektroden leiten die Spannung der Gegenelektrode durch Influenz weiter; aufgrund des geringeren Abstandes zwischen Düse und Zwischenelektrode wird das elektrische Feld stärker als das elektrische Feld ohne Zwischenelektroden zwischen Düse und Gegenelektrode. Wird eine Zwischenelektrode geerdet, so liegen dort nur noch 0 V an und das Feld zwischen Düse und Zwischenelektrode wird schwächer. Werden nun die Zwischenelektroden alternierend geerdet, so werden die Fasern zwischen den Elektroden linear in eine Vorzugsrichtung orientiert abgelegt, man erhält ein orientiertes Faservlies.

Der Durchmesser der abbaubaren Fasern des vorzugsweise in eine Richtung orientierten Faservlieses sollte in der gleichen Größenordnung liegen wie der später gewünschte Innendurchmesser der Hohlfasern des orientierten Hohlfaservlieses. In der Regel ist der spätere Innendurchmesser der Hohlfasern des orientierten Hohlfaservlieses ungefähr gleich groß wie der Durchmesser der abbaubaren Fasern, bzw. Beschichtungen. Die genaue Dimensionierung hängt von den verwendeten Materialien bzw. deren Veränderungen während des Abbauprozesses ab und kann durch orientierende Versuche unschwer ermittelt werden.

Als abbaubare Fasermaterialien können organische oder anorganische Materialien, insbesondere Polymere wie Polyester, Polyether, Polyolefine, Polycarbonate, Polyurethane, natürliche Polymere, Polylactide, Polyglycoside, Polyamide, Polyvinylalkohole, Poly-$\alpha$-Methylstyrol, Polymethacrylate und/oder Polyacrylnitrile, eingesetzt werden. Die Beschichtung mit zumindest einem weiteren nicht abbaubaren Material kann durch Gasphasenabscheidung, Plasmapolymerisation oder durch Aufbringen des Materials in einer Schmelze oder in Lösung erfolgen. Die Beschichtung kann in verschiedenen Schichten und mit verschiedenen Materialien erfolgen und bildet die Außenwand der Hohlfasern des erfindungsgemäßen Hohlfaservlieses.

Diese Beschichtung, d. h. der Aufbau der Außenwände der Hohlfasern des erfindungsgemäßen Hohlfaservlieses kann z. B. durch Gasphasenabscheidung, Rakeln, Spin-Coating, Dip-Coating, Besprühen oder Plasmaabscheidung von Polymeren wie Poly(p-xylylen), Polyacrylamid, Polyimiden, Polyestern, Polyolefinen, Polycarbonaten, Polyamiden, Polyethern, Polyphenylen, Polysilanen, Polysiloxanen, Polybenzimidazolen, Polybenzthiazolen, Polyoxazolen, Polysulfiden, Polyesteramiden, Polyarylenvinylenen, Polylactiden, Polyetherketonen, Polyurethanen, Polysulfonen, Ormoceren, Polyacrylaten, Siliconen, vollaromatischen Copolyestern, Poly-N-vinylpyrrolidon, Polyhydroxyethylmethacry-lat, Polymethylmethacrylat, Polyethylenterephthalat, Polybutylenterephthalat, Polymethacrylnitril, Polyacrylnitril, Poly-vinylacetat, Neopren, Buna N, Polybutadien, Polytetrafluorethen, Cellulose (modifiziert oder nichtmodifiziert), $\alpha$-Olefinen, Alginate oder Collagen, deren Homo- oder Copolymerisate und/oder Blends erfolgen.

Weiterhin können die abbaubaren Fasern mit einem weiteren Material beschichtet werden, das durch Polymerisation, Polykondensation oder Polyaddition eines oder mehrerer Monomeren erhalten wird. Geeignete Monomere für die Mono- oder Copolymerisation, -addition oder - kondensation sind z. B. Methacrylat, Styrolsulfonat, 1,6-Hexamethylendiisocyanat (HDI), 4.4'-Methylenbiscyclohexyldiisocyanat (HMDI), 4,4'-Methylenbis-(benzyldiisocyanat) (MDI), 1,4-Butandiol, Ethylendiamin, Ethylen, Styrol, Butadien, Buten-1, Buten-2, Vinylalkohol, Acrylnitril, Methylmethacrylat, Vinylchlorid, Fluorierte Ethylene oder Therephthalate.

Die Beschichtung, d. h. der Aufbau der Außenwände der Hohlfasern des orientieren Hohlfaservlieses kann aus Metallen der Gruppen Ia, Ib, IIa, IIb, IIIa, IIIb, IVa, IVb, Vb, VIb, VIIb und/oder VIIIb des Periodensystems jeweils als Reinmetall oder Legierung bestehen. Geeignete Metalle sind beispielsweise Gold, Palladium, Aluminium, Platin, Silber, Titan, Kobalt, Ruthenium, Rhodium, Natrium, Kalium, Calzium, Lithium, Vanadium, Nickel, Wolfram, Chrom, Mangan und/oder Silicium. Die Beschichtung kann durch Bedampfen mit den Metallen oder durch Zersetzung geeigneter metallorganischer Verbindungen mit CVD-Verfahren erfolgen.

Polymere Beschichtungsmaterialien können weiterhin funktionelle Gruppen wie Ester, Amide, Amine, Silylgruppen, Siloxangruppen, Thiole, Hydroxylgruppen, Urethangruppen, Carbamatgruppen, Nitrilgruppen, C=C-Gruppen, C≡C-Gruppen, Carbonsäurehalogenidgruppen, Sulfoxidgruppen, Sulfongruppen, Pyridylgruppen, Arylphosphingruppen oder auch ionische Gruppen wie Carbonsäuren, Sulfonsäuren oder quartäre Amine tragen. Die funktionellen Gruppen können an der Innen- und/oder Außenseite der Hohlfasern des erfindungsgemäßen Hohlfaservlieses angebracht sein und die Oberflächeneigenschaften der Hohlfasern bei Trenn- oder Osmoseverfahren verbessern. Die funktionellen Gruppen können auch nachträglich durch polymeranaloge Umsetzungen chemisch verändert werden (z. B. Verseifen von Estern).

Durch eine entsprechende Funktionalisierung können auch Wirkstoffe wie Antibiotika, Anästhetika, Proteine wie Insulin, Antifouling Agentien, Agrochemikalien wie Herbizide oder Fungizide reversibel in den Hohlfasern fixiert und/ oder langsam mit konstanter Rate wieder abgegeben (Controlled bzw. Slow-Release) werden.

Die Außenwand der Hohlfasern des erfindungsgemäßen Hohlfaservlieses, d. h. das nichtabbaubare weitere Material kann auch aus Glas, Glaskeramiken, $SiO_x$, Perowskit, Keramiken, Aluminiumoxiden oder Zirkoniumoxiden, optional aus Siliziumkarbid, Bornitrid, Kohlenstoff sowie Metalloxiden aufgebaut sein. Hier bieten sich ebenfalls Gasphasenabscheideverfahren (CVD oder PVD) oder auch Hydrothermalverfahren an.

Geeignet sind Perowskite der allgemeinen Formel

LaXYMgO

mit    X = Ca, Sr, Ba
       Y = Ga, Al

(ohne Stöchiometrie), die sauerstoffionenleitende Eigenschaften besitzen.

Der Abbau des abbaubaren Materials kann thermisch, chemisch, strahleninduziert, biologisch, photochemisch, durch Plasma, Ultraschall, Hydrolyse oder durch Extraktion mit einem Lösungsmittel erfolgen. In der Praxis hat sich der thermische Abbau bewährt. Die Zersetzungsbedingungen liegen je nach Material bei 100 - 500 °C und 0.001 mbar bis 1 bar, besonders bevorzugt bei 0.001 bis 0.1 mbar. Durch den Abbau des Materials wird eine Hohlfaser erhalten, deren Wandmaterial aus den Beschichtungsmaterialien besteht.

Es können auch mehrere Schichten aus verschiedenen Materialien auf die Fasern des orientierten Faservlieses aufgebracht werden. Es werden so orientierte Hohlfaservliese mit Hohlfasern erhalten, die unterschiedliche Innen- und Außenwände aufweisen bzw. die Außenwände der Hohlfasern können aus mehreren Schichten aufgebaut werden. Die unterschiedlichen Schichten können unterschiedliche Funktionen erfüllen; so kann die innere Schicht besondere Trenneigenschaften für z. B. chromatographische Zwecke und die äußere Schicht eine hohe mechanische Stabilität aufweisen.

Beispielhaft seien die folgenden Schichtabfolgen der Hohlfasern der erfindungsgemäßen orientierten Hohlfaservliese genannt:

Glas / Metall
Metall / Glas
Glas / Polymer
Polymer / Glas
Polymer / Polymer
Metall / Metall
Metallhaltige anorganische Verbindung / Metallhaltige anorganische Verbindung
Keramik / Keramik
Polymer / Metall
Metall / Polymer
Keramik / Polymer
Polymer / Keramik
Metall / Keramik
Keramik / Metall
Polymer / Metall / Polymer
Metall / Polymer / Metall
Metall / Keramik / Metall
Polymer / Keramik / Polymer
Keramik / Polymer / Keramik
Polymer / Glas/Polymer
Glas / Polymer / Glas

Erfindungsgemäße orientierte Hohlfaservliese können insbesondere als Separations- oder Speichermedium für Gase, Flüssigkeiten oder Partikelsuspensionen und zur Filtration oder Reinigung von Stoffgemischen verwendet werden. Hier bietet sich der Einsatz als Membrane für Gase, insbesondere $H_2$ oder Flüssigkeiten, zur Partikelfiltration, in der Chromatographie, zur Öl-/Wassertrennung, als Ionenaustauscher in der Dialyse, zur Größenseparation von Zellen, Bakterien oder Viren, als Bestandteil einer künstlichen Lunge, zur Entsalzung, zur Ent- oder Bewässerung oder als Filter zur Entwässerung von Treibstoffen an.

Weiterhin können erfindungsgemäße orientierte Hohlfaservliese in der Sensorik für Lösungsmittel-, Gas-, Feuchte- oder Biosensoren, in der Kapillarelektrophorese, in katalytischen Systemen, oder als Werkstoffe in der Superleichtbauweise, als mechanische Verstärkung analog zu Glasfasern, als Schall- oder Schwingungsschutz als Verbundwerkstoff oder Füllstoff, als Controlled-Release- oder Drug-Delivery-System, in medizinischen Separationstechniken, in der Dialyse, als künstliche Lunge, Proteinspeicher oder im Tissue Engineering verwendet werden.

In der Bekleidungs-/Textilindustrie können die erfindungsgemäßen orientierten Hohlfaservliese als Wärmeisolator in Kleidung oder Schlafsäcken, in photo- oder thermochromer Bekleidung durch Einbetten von Farbstoffen im Röhreninnern oder als Kennzeichner durch Marker im Röhreninneren verwendet werden.

Außerdem finden erfindungsgemäße Hohlfaservliese in der Elektronik, Optik oder der Energiegewinnung Verwendung. So können aus den orientierten Hohlfasern der Hohlfaservliese Drähte, Kabel oder Kapazitäten, Mikromaschinen (z. B. für piezoelektrische Verformung, Nanoperistaltikpumpen oder zur Verformung von photoadressierbaren Polymeren) oder Interlayer-Dielektrika, hergestellt werden. Weitere Verwendungen für erfindungsgemäße Hohlfaservliese sind Mikroreaktoren z. B. für katalytische Reaktionen, Templatereaktionen und Bioreaktoren, die Wärmeerzeugung durch Umwandlung von Sonnenlicht (Solar-$\alpha$-Systeme), oder in der Chiptechnologie als flexible Devices.

Je nach für die Bildung der Hohlfaser verwendeten Materialien können die erfindungsgemäßen Hohlfaservliese eine sehr niedrige Dielektrizitätskonstante aufweisen und können daher in diesem Fall auch als Dielektrikum, insbesondere als Interlayer-Dielektrikum in elektronischen Bauteilen, z. B. bei der Chipherstellung verwendet werden. Bei der Produktion neuer Chip-Generationen mit noch kleineren Dimensionen bzw. höhere Speicherdichten sind Interlayer-Dielektrika mit einer niedrigen Dielektrizitätskonstante wichtig. Die erfindungsgemäßen Hohlfasern weisen aufgrund des hohen Anteils an umschlossener Luft pro Volumen eine Dielektrizitätskonstante von kleiner 4, bevorzugt kleiner 3, ganz besonders bevorzugt kleiner 2 und im Idealfall kleiner 1.5 auf.

Durch die große Oberfläche der Hohlfasern der erfindungsgemäßen Hohlfaservliese können diese auch in Brennstoffzellen, Batterien oder in elektrochemischen Reaktionen verwendet werden. Vorteilhaft besteht die Außenwand der Hohlfasern der orientierten Hohlfaservliese für solche Verwendungen aus Sauerstoffionenleitern wie z. B. Perowskiten. Bei Oxidationsreaktionen können die Hohlfasern vom Edukt (z. B. einem Olefin) umspült werden, während durch die Hohlräume der Fasern Sauerstoff geleitet wird. Das Oxidationsprodukt wird außen an den Hohlfasern gebildet und abgeführt.

Die erfindungsgemäßen orientierten Hohlfaservliese können als katalytisches System verwendet werden. So können beispielsweise orientierte Hohlfaservliese aus Edelmetallen wie Platin oder Palladium als Entstickungskatalysatoren oder orientierte Hohlfaservliese, die Edelmetalle, wie Platin und/oder Palladium aufweisen, in Kraftfahrzeugen eingesetzt werden.

Durch Überkreuzlegung einzelner erfindungsgemäßer orientierter Hohlfaservliese lassen sich Kreuzlagevliese, bei denen die Hohlfasern vorzugsweise in zwei Richtungen orientiert sind, herstellen, die beispielsweise in der Mikroreaktionstechnik als Mikrowärmetauscher oder zur Gasseperation eingesetzt werden können.

Die folgenden Beispiele sollen die Erfindung näher erläutern, ohne ihren Umfang zu beschränken.

**Beispiel 1:** Herstellung eines orientierten Polylactid-Templatfaservlieses durch Abscheidung auf einem Rahmen.

Eine 6,3% ige Lösung von Poly-L-lactid in Dichlormethan wurde in der in Fig. 7 gezeigten Elektrospinnapparatur bei einer Spannung auf einem rechtwinkligen Aluminiumrahmen (25 cm Rahmenlänge, Breite 6.5 cm, der in den Raum zwischen Düse (+12 KV) und Gegenelektrode (-35 KV) gebracht wurde, bei einer Flussrate von 1 ml/min versponnen. Der Abstand der Kanülenspitze (Durchmesser 0.3 mm) von dem Aluminiumrahmen betrug 10 cm. Das orientierte Polylactidfaservlies wurde ohne weitere Behandlung weiterverwendet. Eine lichtmikroskopische Aufnahme der vorzugsweise linearen in einer Vorzugsrichtung orientierten Fasern des Faservlieses ist in Fig.8 gezeigt.

**Beispiel 2:** Herstellung eines orientierten Polylactid-Templatfaservlieses durch Verstrecken.

Eine 6.3%ige Lösung von Poly-L-lactid in Dichlormethan wurde in der in Fig. 1 gezeigten Elektrospinnapparatur bei einer Spannung von 35 kV versponnen. Der Abstand der Kanülenspitze (Durchmesser 0.3 mm) von der Substratplatte (Glas) betrug 10 cm. Die Polylactidfasern wurden anschließend durch Streckung des Faservlieses um 75% der Ausgangslänge entlang einer Achse orientiert (Fig. 2). Das orientierte Polylactidfaservlies wurde ohne weitere Behandlung weiterverwendet. Eine lichtmikroskopische Aufnahme der Fasern ist in Fig. 9 gezeigt.

**Beispiel 3:** Herstellung eines orientierten Polylactid-Templatfaservlieses durch Abscheidung der Fasern auf eine rotierende Trommel als Elektrode

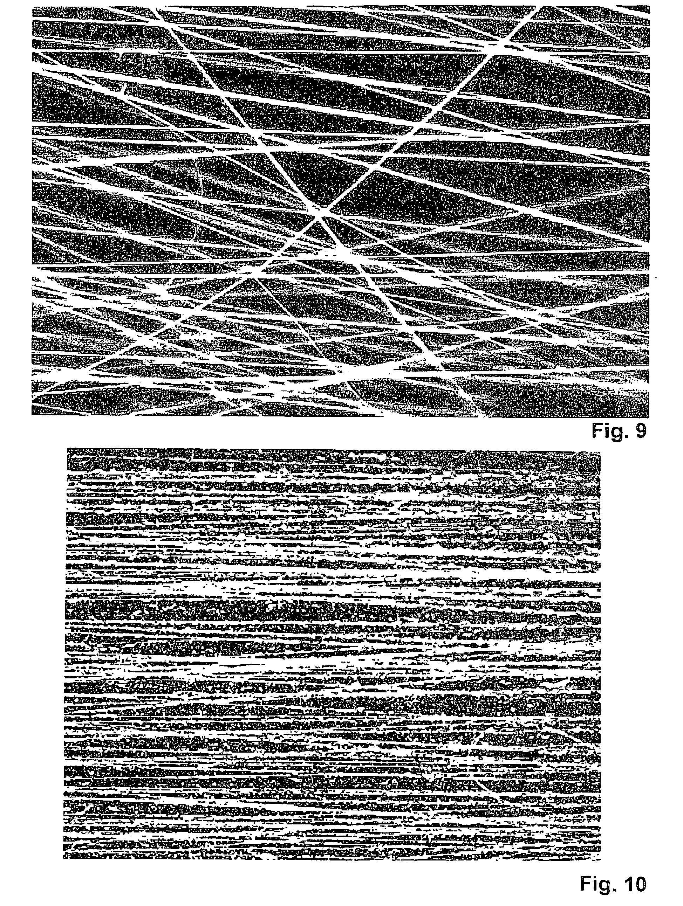

Eine 5%ige Lösung von Poly-L-lactid wurde in einer Fig. 3 entsprechenden Elektrospinnapparatur bei einer Hochspannung von +15 KV an der Kanülenspitze und -0 KV an der Trommel (Gegenelektrode) bei einer Drehzahl von 10 Hz versponnen. Der Abstand der Kanülenspitze (Durchmesser 0.3 mm) von der Trommel betrug 10 cm. Der Durchmesser der 7 cm breiten Trommel betrug 10 cm. Eine lichtmikroskopische Aufnahme der Fasern des orientierten Polylactidfaservlieses ist in Fig. 10 gezeigt.

**Beispiel 4:** Herstellung eines orientierten Polylactid-Templatfaservlieses durch Abscheidung der Fasern mit Hilfe wechselnder Hochspannungsfelder

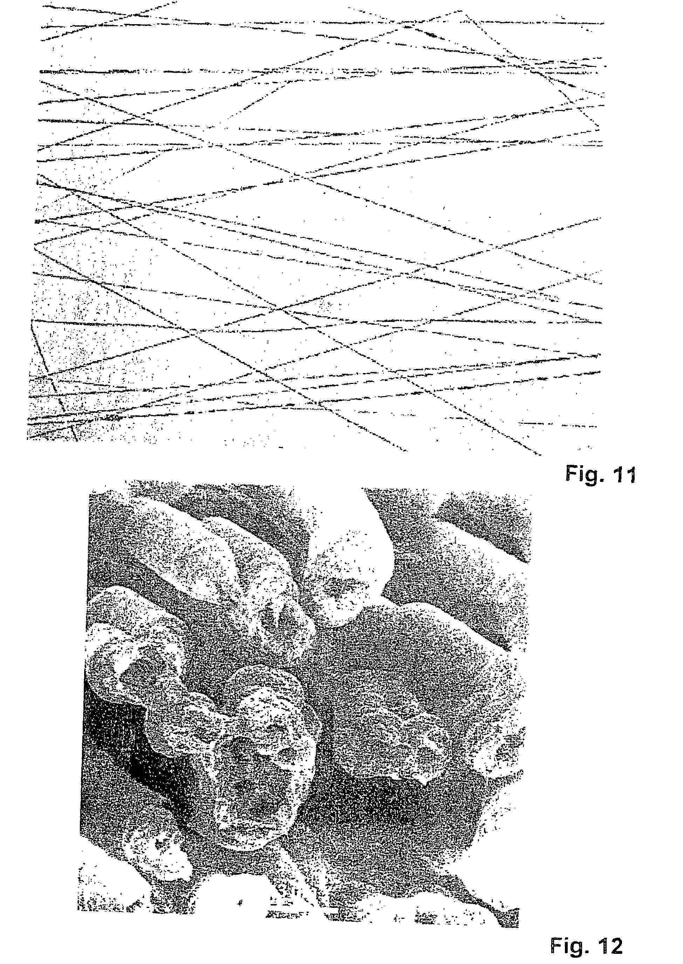

Eine 5%ige Lösung von Poly-L-lactid wurde in einer Fig. 6 entsprechenden Elektrospinnapparatur bei einer Hochspannung von + 15 KV an der Kanülenspitze, - 10 KV an der Gegenelektroden und 0 KV an den Zwischenelektroden versponnen. Der Abstand der Kanülenspitze (Durchmesser 0.3 mm) von den Zwischenelektroden (runde Messingscheibe mit einem Duchmesser von 10 cm, Dicke 1 cm, darauf zentriert aufgesetzt ein Messingrohr mit 1 cm Durchmesser und 15 cm Länge) betrug 15 cm. Der Abstand der Zwischenelektroden betrug 10 cm und der Abstand von den Zwischenelektroden zu den Gegenelektroden (Messingscheiben mit einem Durchmesser von 5 cm und 1 cm Dicke) betrug 3 cm. Eine lichtmikroskopische Aufnahme der Fasern des in eine Vorzugsrichtung orientierten Polylactidfaservlieses ist in Fig. 11 gezeigt.

**Beispiel 5:** Herstellung von orientierten Poly-*p*-xylylen/Gold-Verbundhohlfaservliesen

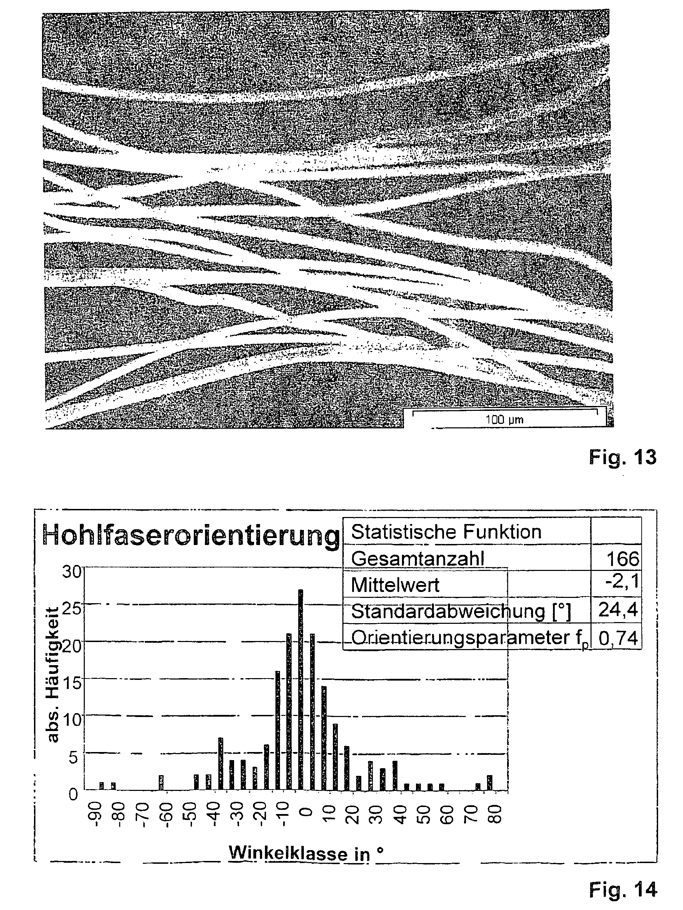

Polylactid-Templatfaservliese, hergestellt durch Electrospinning auf einem Aluminiumrahmen gemäß Beispiel 1 wurden in einer Bedampfungsapparatur mit Gold aus der Gasphase beschichtet (Schichtdicke 100 nm). Anschließend wurden 700 mg analysenreines [2.2]Paracyclophan in einer Gasabscheidungsapparatur bei 180 °C/0.1 mbar verdampft und bei 580 °C pyrolysiert wodurch sich im Probenraum bei ca 20 °C eine Poly(p-xylylen)-Schicht(PPX) auf dem Verbundfaservlies bildete. Anschließend wurde das Polylactid des Polyp-xylylen)/Gold/Polylactid-Compositvlieses durch Pyrolyse bei 365 °C/0.01 mbar entfernt. Die Bildung von Poly(p-xylylen)/Gold-Verbundhohlfasern mit einem Innendurchmessern von ca. 1.2 $\mu$m - 0.5 $\mu$m konnte durch Rasterelektronenmikroskopie belegt werden (Fig. 12). Das Vorhandensein der Goldbeschichtung an der Innenwand der Poly(p-xylylen)-Hohlfasern wurde durch elementspezifische Rasterelektronenmikroskopie nachgewiesen. Die Orientierung der Poly(p-xylylen/Gold-Hohlfasern im Hohlfaservlies vorzugsweise in einer Richtung wurde durch Lichtmikroskopie (Fig. 13) und der Bestimmung des Orientierungsparameters fp = 0.74 nachgewiesen (Fig. 14). Die Orientierung ist auch durch die Standardabweichung [°] charakterisiert. Sie betrug für dieses Beispiel 24,4.

**Beispiel 6:** Herstellung eines orientierten Poly(p-xylylen)/Polylactidfaservlieses durch Beschichtung orientierter Polylactid-Templatfaservliese aus der Gasphase

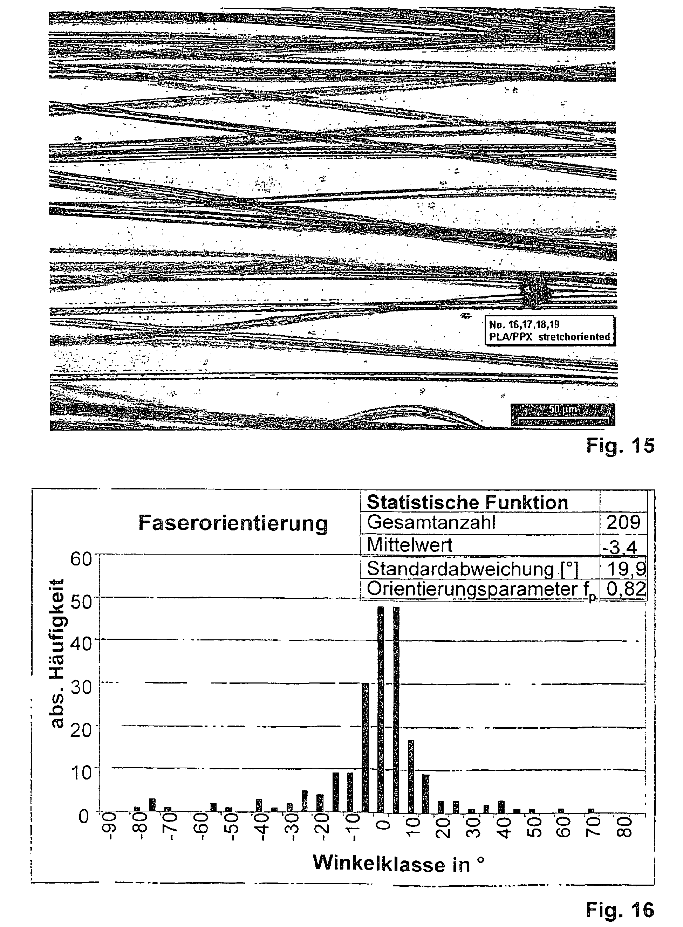

Ein orientiertes Polylactid-Templatfaservlies hergestellt durch Electrospinning und anschließender Verstreckung gemäß Beispiel 2 wurde in dem Probenraum einer Gasphasenabscheidungs-apparatur plaziert. Anschließend wurden 700 mg analysenreines [2.2]Paracyclophan bei 180 °C/0.1 mbar verdampft und bei 580 °C pyrolysiert, wodurch sich im Probenraum bei ca. 20 °C Poly(p-xylylen) bildete. Der Orientierungsgrad des Poly(p-xylylen)/Polylactid-Compositfaservlieses wurde durch Lichtmikroskopie und der Bestimmung des Orientierungsparameters fp = 0.82 nachgewiesen (Fig. 15 u. 16). Die Orientierung ist auch durch die Standardabweichung [°] charakterisiert. Sie betrug für dieses Beispiel 19,9.

**Beispiel 7:** Herstellung eines orientierten Poly(p-xylylen)hohlfaservlieses durch Beschichtung orientierter Polylactid-Templatfaservliese aus der Gasphase

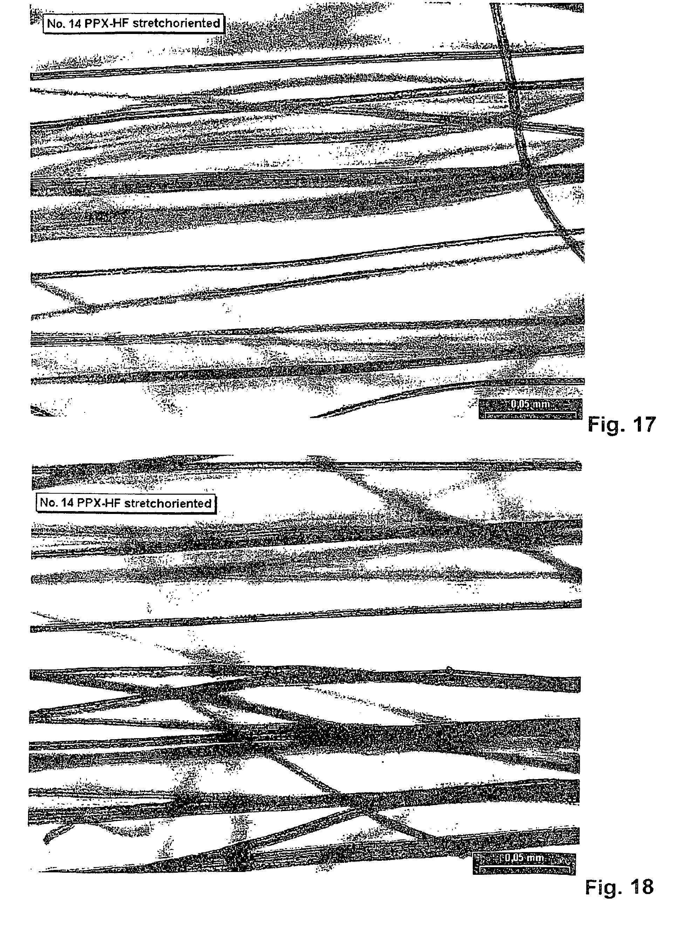

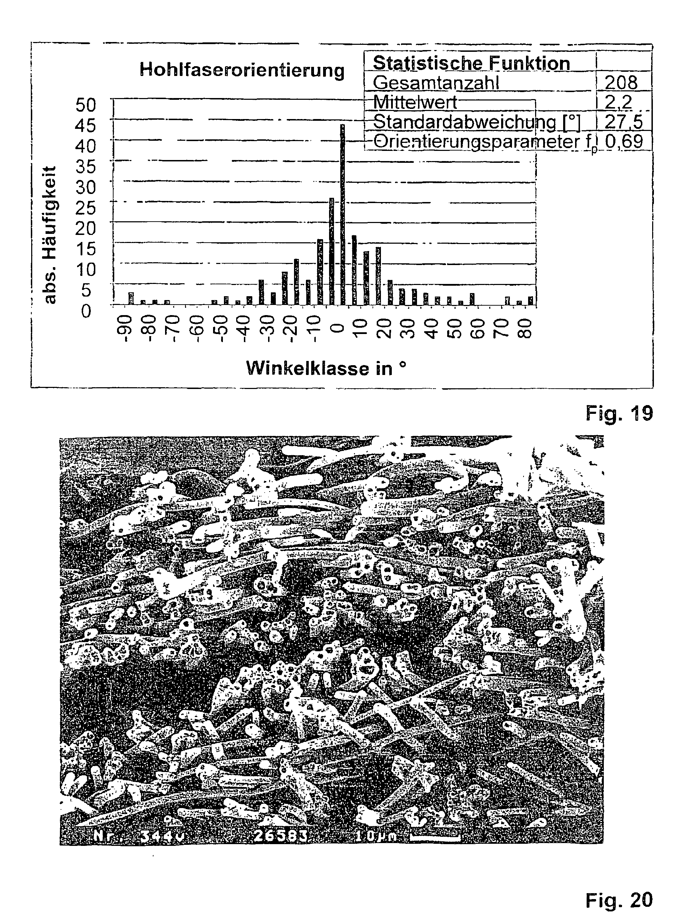

Ein orientiertes Polylactid-Templatfaservlies hergestellt durch Electrospinning und anschließender Verstreckung gemäß Beispiel 2 wurde in dem Probenraum einer Gasphasenabscheidungsapparatur plaziert. Anschließend wurden 700 mg analysenreines [2.2]Paracyclophan bei 180 °C/0.1 mbar verdampft und bei 580 °C pyrolysiert, wodurch sich im Probenraum bei ca. 20 °C Poly(p-xylylen) bildete. Anschließend wurde das Polylactid des Polyp-xylylen)/Polylactid-Compositvlieses durch Pyrolyse bei 365 °C/0.01 mbar entfernt. Die Orientierung der Hohlfasern des Poly(p-xylylen)hohlfaservlieses in eine Vorzugsrichtung wurde durch Lichtmikroskopie (Fig. 17 u. 18) und der Bestimmung des Orientierungsparameters fp = 0.69 nachgewiesen (Fig.19). Die Bildung von Poly(p-xylylen)hohlfasern mit einem Innendurchmessern von ca. 1.5 $\mu$m - 0.3 $\mu$m konnte durch Rasterelektronenmikroskopie belegt werden (Fig. 20). Die Orientierung ist auch durch die Standardabweichung [°] charakterisiert. Sie betrug für dieses Beispiel 27,5.

**Beispiel 8:** Herstellung eines orientierten Poly(p-xylylen)hohlfaservlieses auf Basis eines mit Hilfe mechanisch erzeugter Hochspannungswechselfelder erzeugtem orientierten Templatfaservlieses

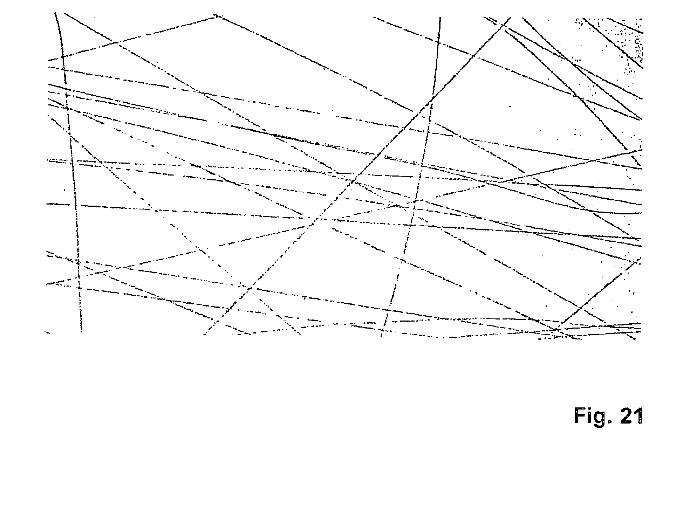

Eine 5%ige Lösung von Poly-L-lactid wurde in einer Fig. 7 entsprechenden Elektrospinnapparatur mit einer um die Längsachse rotierenden, hakenförmigen Gegenelektrode (Fig. 3c) bei einer Hochspannung von +15 KV an der Kanülenspitze und -10 KV an der Hakenelektrode versponnen. Der Abstand der Kanülenspitze (Durchmesser 0.3 mm) von der Hakenelektrode betrug 15 cm. Die Haken der Gegenelektrode waren 0.5 cm breit, 5 hoch und 0.1 cm dick, der Abstand von Haken zu Haken betrug 15 cm. Eine lichtmikroskopische Aufnahme der Fasern des in eine Vorzugsrichtung orientierten Polylactidfaservlieses ist in Fig. 21 gezeigt. Das orientierte Polylactid-Templatfaservlies wurde in dem Probenraum einer Gasphasenabscheidungsapparatur plaziert. Anschließend wurden 550 mg analysenreines [2.2]Paracyclophan bei 180 °C/0.1 mbar verdampft und bei 580 °C pyrolysiert, wodurch sich im Probenraum bei ca. 20 °C Poly(p-xylylen) bildete. Anschließend wurde das Polylactid des Polyp-xylylen)/Polylactid-Compositvlieses durch Pyrolyse bei 365 °C/0.01 mbar entfernt. Der auf Basis einer lichtmikroskopischen Aufnahme ermittelte Orientierungsparameter $f_p$ des orientierten Poly(p-xylylen)hohlfaservlieses betrug 0.36. Die Orientierung ist auch durch die Standardabweichung [°] charakterisiert. Sie betrug für dieses Beispiel 41.

**Legende zu den Abbildungen:**

Fig. 1. Schematische Darstellung einer Elektrospinnapparatur mit zwischen Düse und Gegenelektode angeordneten Rahmen mit a) Düse, b) Polymerlösungsstrahl (Jet), c) Rahmen, d) Gegenelektrode, e) Spinnfasern

Fig. 2. Schematische Darstellung der Herstellung von orientierten Faservliesen durch Verstrecken mit m) Streckrichtung, n) beliebig geordnetes Faservlies o) orientiertes Faservlies

Fig. 3.   Schematische Darstellung einer Elektrospinnapparatur mit einer rotierenden Trommel als Gegenelektrode mit a) Düse, b) Polymerlösungsstrahl (Jet), f) Trommel (Gegenelektrode)

Fig. 4.   Schematische Darstellung einer Elektrospinnapparatur mit rotierenden Elektroden mit a) Düse, b) Polymerlösungsstrahl (Jet), g) Hakenelektrode, h) Doppelhakenelektrode, i) Stabelektroden

Fig. 5.   Schematische Darstellung einer Elektrospinnapparatur mit wechselnd geschalteten Gegenelektroden mit a) Düse, b) Polymerlösungsstrahl (Jet), j) Gegenelektroden

Fig. 6.   Schematische Darstellung einer Elektrospinnapparatur mit Zwischenelektroden mit a) Düse, b) Polymerlösungsstrahl (Jet), k) Zwischenelektroden 1) Schalter, j) Gegenelektroden

Fig. 7.   Schematische Darstellung einer Elektrospinnapparatur

Fig. 8.   Polylactid-Templatfasern eines orientierten Polylactid-Templatfaservlieses hergestellt durch Electrospinning aus Dichlormethan mit Hilfe eines zwischen Düse und Gegenelektrode angeordneten Rahmens (Beispiel 1)

Fig. 9.   Polylactid-Templatfasern eines orientierten Polylactid-Templatfaservlieses hergestellt durch Electrospinning aus Dichlormethan und anschließendem Strecken (Beispiel 2)

Fig. 10.   Polylactid-Templatfasern eines orientierten Polylactid-Templatfaservlieses hergestellt durch Electrospinning aus Dichlormethan mit Hilfe einer rotierenden Trommel (Beispiel 3)

Fig. 11   Polylactid-Templatfasern eines orientierten Polylactid-Templatfaservlieses hergestellt durch Electrospinning aus Dichlormethan mit Hilfe von Wechselhochspannung (Beispiel 4)

Fig. 12.   Rasterelektronenmikroskopische Aufnahme von Poly(p-xylylen)/Gold-Hohlfasern eines orientierten Poly(p-xylylen)/Gold-Verbundhohlfaservlieses nach Entfernung der Polylactid-Templatfasern (Beispiel 5).

Fig. 13.   Lichtmikroskopische Aufnahme von Poly(p-xylylen)/Gold-Hohlfasern eines orientierten Poly(p-xylylen)/Gold-Verbundhohlfaservlieses nach Entfernung der Polylactid-Templatfasern. (Beispiel 5)

Fig. 14.   Darstellung des Ergebnisses (Diagramm) der Bestimmung des Orientierungsparameters $f_p$ eines orientierten Poly(p-xylylen)/Gold-Verbundhohlfaservlieses nach Entfernung der Polylactid-Templatfasern. (Beispiel 5)

Fig. 15.   Lichtmikroskopische Aufnahme von Poly(p-xylylen)/Polylactidfasern eines orientierten Poly(p-xylylen)/Polylactidfaservlieses (Beispiel 6)

Fig. 16.   Darstellung des Ergebnisses (Diagramm) der Bestimmung des Orientierungsparameters $f_p$ eines orientierten Poly(p-xylylen)/Polylactidfaservlieses (Beispiel 6)

Fig. 17.   Lichtmikroskopische Aufnahme von Poly(p-xylylen)hohlfasern eines orientierten Poly(p-xylylen)hohlfaservlieses nach Entfernung der Polylactid-Templatfasern (Beispiel 7)

Fig. 18.   Lichtmikroskopische Aufnahme von Poly(p-xylylen)hohlfasern eines orientierten Poly(p-xylylen)hohlfaservlieses nach Entfernung der Polylactid-Templatfasern (Beispiel 7)

Fig. 19.   Darstellung des Ergebnisses (Diagramm) der Bestimmung des Orientierungsparameters $f_p$ eines orientierten Poly(p-xylylen)hohlfaservlieses nach Entfernung der Polylactid-Templatfasern (Beispiel 7)

Fig. 20.   Rasterelektronenmikroskopische Aufnahme von Poly(p-xylylen)hohlfasern eines orientierten Poly(p-xylylen)hohlfaservlieses nach Entfernung der Polylactid-Templatfasern (Beispiel 7).

Fig. 21.   Polylactid-Templatfasern eines orientierten Polylactid-Templatfaservlieses durch Electrospinning aus Dichlormethan mit Hilfe von Wechselhochspannung (Beispiel 4)

**Patentansprüche**

1. Hohlfaservliese, die Hohlfasern mit einem Innendurchmesser von 10 nm bis 50 $\mu$m und einer Außenwand, aufgebaut aus metallhaltigen anorganischen Verbindungen, Polymeren und/oder Metallen, aufweisen,
   **dadurch gekennzeichnet,**
   **dass** die das Hohlfaservlies bildenden Hohlfasern vorzugsweise in eine Richtung orientiert sind wobei die Hohlfasern einen Orientierungsgrad von fp 0.2 bis 1 aufweisen.

2. Hohlfaservliese nach Anspruch 1,
   **dadurch gekennzeichnet,**
   **dass** der Orientierungsgrad fp 0.5 bis 1 beträgt.

3. Hohlfaservliese nach zumindest einem der Ansprüche 1 oder 2,
   **dadurch gekennzeichnet,**
   **dass** der Innendurchmesser der Hohlfasern 10 nm bis 1 $\mu$m beträgt.

4. Hohlfaservliese nach zumindest einem der Ansprüche 1 bis 3,
   **dadurch gekennzeichnet,**
   **dass** die Außenwand der Hohlfasern aus Poly(p-xylylen), Polyacrylamid, Polyimiden, Polyestern, Polyolefinen, Polycarbonaten, Polyamiden, Polyethern, Polyphenylen, Polysilanen, Polysiloxanen, Polybenzimidazolen, Polybenzthiazolen, Polyoxazolen, Polysulfiden, Polyesteramiden, Polyarylenvinylenen, Polylactiden, Polyetherketonen, Polyurethanen, Polysulfonen, Ormoceren, Polyacrylaten; Siliconen, vollaromatischen Copolyestern, Poly-N-vinylpyrrolidon, Polyhydroxyethylmethacrylat, Polymethylmethacrylat, Polyethylenterephthalat, Polybutylentherephthalat, Polymethacrylnitril, Polyacrylnitril, Polyvinylacetat, Neopren, Buna N, Polybutadien, Polytetrafluorethen, Cellulose (modifiziert oder nichtmodifiziert), Alginaten oder Collagen, deren Homo- oder Copolymerisaten und/oder Blends aufgebaut ist.

5. Hohlfaservliese nach zumindest einem der Ansprüche 1 bis 3,
   **dadurch gekennzeichnet,**
   **dass** die Außenwand der Hohlfasern aus Metallen der Gruppen Ia, Ib, IIa, IIb, IIIa, IIIb, IVa, IVb, Vb, VIb, VIIb und/oder VIIIb des Periodensystems, jeweils als Reinmetall oder Legierung aufgebaut ist.

6. Hohlfaservliese nach zumindest einem der Ansprüche 1 bis 3,
   **dadurch gekennzeichnet,**
   **dass** die Außenwand der Hohlfasern aus Glas, Glaskeramiken, SiO$_x$, Perowskit, Keramiken, Aluminiumoxiden oder Zirkonoxiden aufgebaut ist.

7. Hohlfaservliese nach zumindest einem der Ansprüche 1 bis 6,
   **dadurch gekennzeichnet,**
   **dass** die Außenwand der Hohlfasern aus mehreren Schichten aufgebaut ist.

8. Hohlfaservliese nach zumindest einem der Ansprüche 1 bis 3,
   **dadurch gekennzeichnet,**
   **dass** das Hohlfaservlies eine Dielektrizitätskonstante von kleiner 4 aufweist.

9. Verfahren zur Herstellung von orientierten Hohlfaservliesen, die Hohlfasern mit einer Außenwand, aufgebaut aus metallhaltigen anorganischen Verbindungen, Polymeren und/oder Metallen, aufweisen,
   **dadurch gekennzeichnet,**
   **dass** erst ein Faservlies aus vorzugsweise in einer Richtung orientierten Fasern aus einem ersten abbaubaren Material erzeugt wird, dieses orientierte Faservlies mindestens eine Beschichtung aus einer metallhaltigen anorganischen Verbindung, Polymeren und/oder Metallen erhält und anschließend das erste Material mit der Maßgabe abgebaut wird, dass die Hohlfasern des so erhaltenen Hohlfaservlieses mit einen Innendurchmesser von 10 nm bis 50 $\mu$m vorzugsweise in eine Richtung orientiert sind, wobei die Hohlfasern einen Orientierungsgrad von fp 0.2 bis 1 aufweisen.

10. Verfahren nach Anspruch 9,
    **dadurch gekennzeichnet,**
    **dass** das Faservlies aus vorzugsweise in einer Richtung orientierten Fasern aus einem ersten abbaubaren Material mit Hilfe der Elektrospinningtechnik erzeugt wird, indem man die Fasern beim Elektrospinnprozess auf einen in den Raum zwischen Düse und Gegenelektrode angeordneten Rahmen aus einem leitfähigen Material abscheidet.

11. Verfahren nach Anspruch 10,
**dadurch gekennzeichnet,**
**dass** der Rahmen aus einem leitfähigen Material rechtwinklig ist.

12. Verfahren nach Anspruch 11,
**dadurch gekennzeichnet,**
**dass** das Faservlies aus vorzugsweise in einer Richtung orientierten Fasern aus einem ersten abbaubaren Material erzeugt wird, indem zunächst ein Faservlies aus einem ersten, abbaubaren Material mit Hilfe der Elektrospinning-Technik hergestellt und die Fasern anschließend durch Verstrecken vorzugsweise in eine Richtung ausgerichtet werden.

13. Verfahren nach Anspruch 12,
**dadurch gekennzeichnet,**
**dass** das Faservlies aus vorzugsweise in einer Richtung orientierten Fasern aus einem ersten abbaubaren Material mit Hilfe der Elektrospinningtechnik erzeugt wird, indem man die Fasern aus einem ernsten abbaubaren Material auf einer leitfähigen, rotierenden Trommel als Gegenelektrode abscheidet.

14. Verfahren nach Anspruch 13,
**dadurch gekennzeichnet,**
**dass** das Faservlies aus vorzugsweise in einer Richtung orientierten Fasern aus einem ersten abbaubaren Material durch Elektrospinningtechnik mit Hilfe eines Hochspannungswechselfeldes erzeugt wird.

15. Verfahren nach Anspruch 14,
**dadurch gekennzeichnet,**
**dass** das Hochspannungswechselfeld mechanisch erzeugt wird.

16. Verfahren nach Anspruch 15,
**dadurch gekennzeichnet,**
**dass** das Hochspannungswechselfeld durch eine rotierende Hakenelektrode erzeugt wird.

17. Verfahren nach Anspruch 15,
**dadurch gekennzeichnet,**
**dass** das Hochspannungswechselfeld durch eine rotierende Doppelhakenelektrode erzeugt wird.

18. Verfahren nach Anspruch 15,
**dadurch gekennzeichnet,**
**dass** das Hochspannungswechselfeld durch zwei sich synchron drehende, stabförmige Elektroden erzeugt wird.

19. Verfahren nach Anspruch 15,
**dadurch gekennzeichnet,**
**dass** das Hochspannungswechselfeld elektrisch erzeugt wird.

20. Verfahren nach Anspruch 19,
**dadurch gekennzeichnet,**
**dass** das Hochspannungswechselfeld durch eine Wechselhochspannung an zwei Gegenelektroden erzeugt wird.

21. Verfahren nach Anspruch 19,
**dadurch gekennzeichnet,**
**dass** das Hochspannungswechselfeld bei geringem Potentialunterschied zwischen zwei Gegenelektroden durch wechselseitiges Aufheben der Erdung erzeugt wird.

22. Verfahren nach Anspruch 19,
**dadurch gekennzeichnet,**
**dass** das Hochspannungswechselfeld zwischen zwei Gegenelektroden bei einem an den Gegenelektroden anliegendem Potential von 0 V durch wechselseitiges Erden und Abklemmen erzeugt wird.

23. Verfahren nach Anspruch 19,
**dadurch gekennzeichnet,**
**dass** das Hochspannungswechselfeld mit Hilfe zweier, alternierend geerdeter Zwischenelektroden erzeugt wird.

24. Verfahren nach zumindest einem der Ansprüche 9 bis 23,
**dadurch gekennzeichnet,**
**dass** das weitere Material aus anorganischen Verbindungen, Polymeren und/oder Metallen aufgebaut ist.

25. Verfahren nach einem der Ansprüche 9 bis 24,
**dadurch gekennzeichnet,**
**dass** das weitere Material aus Poly(p-xylylen), Polyacrylamid, Polyimiden, Polyestern, Polyolefinen, Polycarbonaten, Polyamiden, Polyethern, Polyphenylen, Polysilanen, Polysiloxanen, Polybenzimidazolen, Polybenzthiazolen, Polyoxazolen, Polysulfiden, Polyesteramiden, Polyarylenvinylenen, Polylactiden, Polyetherketonen, Polyurethanen, Polysulfonen, Ormoceren, Polyacrylaten, Siliconen, vollaromatischen Copolyestern, Poly-N-vinylpyrrolidon, Poly-hydroxyethylmethacrylat, Polymethylmethacrylat, Polyethylenterephthalat, Polybutylentherephthalat, Polyme-thacrylnitril, Polyacrylnitril, Polyvinylacetat, Neopren, Buna N, Polybutadien, Polytetrafluorethen, Cellulose (modifiziert oder nichtmodifiziert), Alginaten oder Collagen, deren Homo- oder Copolymerisaten und/oder Blends besteht.

26. Verfahren nach einem der Ansprüche 9 bis 24,
**dadurch gekennzeichnet,**
**dass** das weitere Material aus Metallen der Gruppen Ia, Ib, IIa, IIb, IIIa, IIIb, IVa, IVb, Vb, VIb, VIIb und/oder VIIIb des Periodensystems, jeweils als Reinmetall oder Legierung, besteht.

27. Verfahren nach einem der Ansprüche 9 bis 24,
**dadurch gekennzeichnet,**
**dass** das weitere Material aus Metalloxiden, Glas, Glaskeramiken, $SiO_x$, Perowskit, Keramiken, Aluminiumoxiden, Siliziumcarbid, Bornitrid, Kohlenstoff oder Zirkoniumoxiden besteht.

28. Verfahren nach einem der Ansprüche 9 bis 25,
**dadurch gekennzeichnet,**
**dass** das weitere Material durch Polymerisation, Polykondensation oder Polyaddition eines oder mehrerer Monomeren erhalten wird.

29. Verfahren nach Anspruch 28,
**dadurch gekennzeichnet,**
**dass** das weitere Material durch Homo- oder Copolymerisation, -addition oder -kondensation von Methacrylat, Styrolsulfonat, 1,6-Hexamethylendiisocyanat (HDI), 4.4'-Methylenbiscyclohexyldiisocyanat (HMDI), 4,4'-Methylen-bis-(benzyldiisocyanat) (MDI), 1,4-Butandiol, Ethylendiamin, Ethylen, Styrol, Butadien, Buten-1, Buten-2, Vinylalkohol, Acrylnitril, Methylmethacrylat, Vinylchlorid, Fluorierten Ethylenen und/oder Therephthalat erhalten wird.

30. Verfahren nach zumindest einem der Ansprüche 9 bis 29,
**dadurch gekennzeichnet,**
**dass** der Abbau des abbaubaren Materials thermisch, chemisch, biologisch, strahleninduziert, photochemisch, durch Plasma, Ultraschall, Mikrowellen oder Extraktion mit einem Lösungsmittel erfolgt.

31. Verwendung der orientierten Hohlfaservliese gemäß zumindest einem der Ansprüche 1 bis 8 als Separationsmedium oder Speichermedium für Gase, Flüssigkeiten oder Partikelsuspensionen.

32. Verwendung der orientierten Hohlfaservliese gemäß zumindest einem der Ansprüche 1 bis 8 in der Dialyse, als künstliche Lunge, Proteinspeicher, Controlled Release oder Drug Delivery System oder in medizinischen Separationstechniken.

33. Verwendung der orientierten Hohlfaservliese gemäß zumindest einem der Ansprüche 1 bis 8 als Sensorbestandteil, als Mikroreaktor oder in der Mikroelektronik als Draht, Kabel oder Kapazität.

34. Verwendung der orientierten Hohlfaservliese gemäß zumindest einem der Ansprüche 1 bis 8 in der Superleichtbautechnik, als Verbundwerkstoff, als Füllstoff, als mechanische Verstärkung, als Wärmeisolator oder in der Bekleidungsindustrie.

35. Verwendung der orientierten Hohlfaservliese gemäß zumindest einem der Ansprüche 1 bis 8 in Brennstoffzellen, Batterien oder in elektrochemischen Reaktionen.

36. Verwendung der orientierten Hohlfaservliese gemäß zumindest einem der Ansprüche 1 bis 8 in der Kapillarelektrophorese, in der Rastersondenmikroskopie oder in katalytischen Systemen.

37. Verwendung der orientierten Hohlfaservliese gemäß zumindest einem der Ansprüche 1 bis 8 als Dielektrikum.

38. Verwendung der orientierten Hohlfaservliese gemäß zumindest einem der Ansprüche 1 bis 8 als Interlayer-Dielektrikum in der Chipherstellung.

39. Verwendung der orientierten Hohlfaservliese gemäß zumindest einem der Ansprüche 1 bis 8 zur Herstellung von Kreuzlagevliesen.

## Claims

1. Hollow fibre non-wovens, comprising hollow fibres with an internal diameter from 10 nm to 50 $\mu$m and an outer wall made of metal-containing inorganic compounds, polymers and / or metals,
   wherein
   the hollow fibres forming the hollow fibre non-wovens are preferentially oriented in one direction, wherein the hollow fibres comprise a degree of orientation from fp 0.2 to 1.

2. Hollow fibre non-wovens according to claim 1,
   wherein
   the degree of orientation fp ranges from 0.5 to 1.

3. Hollow fibre non-wovens according to at least one of the claims 1 or 2,
   wherein
   the internal diameter of the hollow fibres ranges from 10 nm to 1 $\mu$m.

4. Hollow fibre non-wovens according to at least one of the claims 1 to 3,
   wherein
   the outer wall of the hollow fibers comprises poly(p-xylylene), polyacrylamide, polyimides, polyesters, polyolefins, polycarbonates, polyamides, polyethers, polyphenylene, polysilanes, polysiloxanes, polybenzimidazoles, polybenzothiazoles, polyoxazoles, polysulfides, polyester amides, polyarylenevinylenes, polylactides, polyether ketones, polyurethanes, polysulfones, ormocers, polyacrylates, silicones, fully aromatic copolyesters, poly-N-vinylpyrrolidone, polyhydroxyethyl methacrylate, polymethyl methacrylate, polyethylene terephthalate, polybutylene terephthalate, polymethacrylonitrile, polyacrylonitrile, polyvinyl acetate, neoprene, buna N, polybutadiene, polytetrafluoroethene, cellulose (modified or unmodified), alginates or collagen, their homopolymerisates or copolymerisates and/or blends thereof.

5. Hollow fibre non-wovens according to at least one of the claims 1 to 3,
   wherein
   the outer wall of the hollow fibers comprises metals of the groups Ia, Ib, **II**a, IIb, IIIa, IIIb, IVa, IVb, Vb, VIb, VIIb and/or VIIIb of the Periodic Table, in the form of pure metal or alloy, respectively.

6. Hollow fibre non-wovens according to at least one of the claims 1 to 3,
   wherein
   the outer wall of the hollow fibers comprises glass, glass-ceramics, $SiO_x$, perovskite, ceramics, aluminium oxides or zirconium oxides.

7. Hollow fibre non-wovens according to at least one of the claims 1 to 6,
   wherein
   the outer wall of the hollow fibres comprises several layers.

8. Hollow fibre non-wovens according to at least one of the claims 1 to 3,
   wherein

the hollow fibre non-wovens comprise a dielectric constant of less than 4.

9. Method for the production of oriented hollow non-wovens, comprising hollow fibres with an outer wall made of metal-containing inorganic compounds, polymers and / or metals,
wherein
first a fibre non-woven is formed from preferentially unidirectionally oriented fibres of a first degradable material; this oriented fibre non-woven obtains at least one coating from a metal-containing inorganic compound, polymers and / or metals and the first material is subsequently degraded with the aim that the hollow fibres of the hollow fibre non-woven with an internal diameter of 10 nm to 50 $\mu$m obtained in this way are preferentially oriented in one direction, wherein the hollow fibres comprise a degree of orientation fp ranging from 0.2 to 1.

10. Method according to claim 9,
wherein
the fibre non-woven is formed from preferentially unidirectionally oriented fibres of a first degradable material with the help of the electrospinning technique, by depositing the fibres on a frame made of conductive material arranged in the space between nozzle and counter electrode during the electrospinning process.

11. Method according to claim 10,
wherein
the frame of the conductive material is rectangular.

12. Method according to claim 11,
wherein
the fibre non-woven is formed from preferentially unidirectionally oriented fibres of a first degradable material, by first producing a fibre non-woven from a first degradable material with the help of the electrospinning technique and subsequently orientating the fibres preferentially in one direction through stretching.

13. Method according to claim 12,
wherein
the fibre non-woven is formed from preferentially unidirectionally oriented fibres of a first degradable material with the help of the electrospinning technique, by depositing the fibres of a first degradable material on a rotating drum as a counter electrode made of conductive material.

14. Method according to claim 13,
wherein
the fibre non-woven is formed from preferentially unidirectionally oriented fibres of a first degradable material through the electrospinning technique with the help of a high voltage alternating field.

15. Method according to claim 14,
wherein
the high voltage alternating field is generated mechanically.

16. Method according to claim 15,
wherein
the high voltage alternating field is generated by a rotating hook electrode.

17. Method according to claim 15,
wherein
the high voltage alternating field is generated by a rotating double hook electrode.

18. Method according to claim 15,
wherein
the high voltage alternating field is generated by two synchronously turning rod electrodes.

19. Method according to claim 15,
wherein
the high voltage alternating field is generated electrically.

**20.** Method according to claim 19,
wherein
the high voltage alternating field is generated by an alternating high voltage at two counter electrodes.

**21.** Method according to claim 19,
wherein
the high voltage alternating field is generated at a small potential difference between two counter electrodes by reciprocal cancellation of the grounding.

**22.** Method according to claim 19,
wherein
the high voltage alternating field between two counter electrodes is generated at a potential of 0 V applied to the counter electrodes through reciprocal grounding and disconnecting.

**23.** Method according to claim 19,
wherein
the high voltage alternating field is generated with the help of two intermediate electrodes which are grounded in alternating manner.

**24.** Method according to at least one of the claims 9 to 23,
wherein
the further material comprises inorganic compounds, polymers and/or metals.

**25.** Method according to one of the claims 9 to 24,
wherein
the further material comprises poly(p-xylylene), polyacrylamide, polyimides, polyesters, polyolefins, polycarbonates, polyamides, polyethers, polyphenylene, polysilanes, polysiloxanes, polybenzimidazoles, polybenzothiazoles, polyoxazoles, polysulfides, polyester amides, polyarylenevinylenes, polylactides, polyether ketones, polyurethanes, polysulfones, ormocers, polyacrylates, silicones, fully aromatic copolyesters, poly-N-vinylpyrrolidone, polyhydroxyethyl methacrylate, polymethyl methacrylate, polyethylene terephthalate, polybutylene terephthalate, polymethacrylonitrile, polyacrylonitrile, polyvinyl acetate, neoprene, Buna N, polybutadiene, polytetrafluoroethene, cellulose (modified or unmodified), alginates or collagen, their homopolymerisates or copolymerisates and/or blends thereof.

**26.** Method according to one of the claims 9 to 24,
wherein
the further material comprises metals of the groups Ia, Ib, IIa, IIb, IIIa, IIIb, IVa, IVb, Vb, VIb, VIIb and/or VIIIb of the Periodic Table, in the form of pure metal or alloy respectively.

**27.** Method according to one of the claims 9 to 24,
wherein
the further material comprises metal oxides, glass, glass-ceramics, $SiO_x$, perovskite, ceramics, aluminium oxides, silicon carbide, boron nitride, carbon or zirconium oxides.

**28.** Method according to one of the claims 9 to 25,
wherein
the further material is obtained by polymerisation, polycondensation or polyaddition of one or several monomers.

**29.** Method according to claim 28,
wherein
the further material is obtained by homo- or copolymerisation, -addition or -condensation of methacrylate, styrene sulfonate, 1,6-hexamethylene diisocyanate (HDI), 4,4'-methylenebiscyclohexyl diisocyanate (HMDI), 4,4'-methylenebis(benzyl diisocyanate) (MDI), 1,4-butanediol, ethylenediamine, ethylene, styrene, butadiene, 1-butene, 2-butene, vinyl alcohol, acrylonitrile, methyl methacrylate, vinyl chloride, fluorinated ethylenes and/or terephthalate.

**30.** Method according to at least one of the claims 9 to 29,
wherein
the degradation of the degradable material is carried out thermally, chemically, biologically, radiation-induced, photochemically, by means of plasma, ultrasound or extraction with a solvent.

31. Use of the oriented hollow fibre non-wovens according to at least one of the claims 1 to 8 as a separation medium or a storage medium for gases, liquids or particle suspensions.

32. Use of the oriented hollow fibre non-wovens according to at least one of the claims 1 to 8 in dialysis, as artificial lungs, protein store, controlled release or drug delivery system or in medical separation techniques.

33. Use of the oriented hollow fibre non-wovens according to at least one of the claims 1 to 8 as a sensor constituent, microreactor or in microelectronics as a wire, cable or capacitor.

34. Use of the oriented hollow fibre non-wovens according to at least one of claims 1 to 8 in the super-lightweight construction as composite material, filler, mechanical reinforcement, heat insulator or in the clothing industry.

35. Use of the oriented hollow fibre non-wovens according to at least one of the claims 1 to 8 in fuel cells, batteries or electrochemical reactions.

36. Use of the oriented hollow fibre non-wovens according to at least one of the claims 1 to 8 in the capillary electrophoresis, in scanning probe microscopy or in catalytic systems.

37. Use of the oriented hollow fibre non-wovens according to at least one of the claims 1 to 8 as dielectric material.

38. Use of the oriented hollow fibre non-wovens according to at least one of the claims 1 to 8 as an interlayer dielectric material in the production of chips.

39. Use of the oriented hollow fibre non-wovens according to at least one of the claims 1 to 8 for the production of cross-laid non-wovens.


**Revendications**

1. Non-tissés en fibres creuses qui présentent des fibres creuses avec un diamètre intérieur de 10 nm à 50 $\mu$m et une paroi extérieure réalisée à partir de composés anorganiques contenant du métal, de polymères et / ou de métaux, **caractérisés en ce que** les fibres creuses formant le non-tissé en fibres creuses sont de préférence orientées directionnellement où les fibres creuses présentent un degré d'orientation fp de 0.2 à 1.

2. Non-tissés en fibres creuses selon la revendication 1, **caractérisés en ce que** le degré d'orientation fp est de 0.5 à 1.

3. Non-tissés en fibres creuses selon au moins l'une des revendications 1 ou 2, **caractérisés en ce que** le diamètre intérieur des fibres creuses est de 10 nm à 1 $\mu$m.

4. Non-tissés en fibres creuses selon au moins l'une des revendications 1 à 3, **caractérisés en ce que** la paroi extérieure des fibres creuses est réalisée à partir de poly(p-xylylène), de polyacrylamide, de polyimides, de polyesters, de polyoléfines, de polycarbonates, de polyamides, de polyéthers, de polyphénylène, de polysilanes, de polysiloxanes, de polybenzimidazoles, de polybenzothiazoles, de polyoxazoles, de polysulfides, de polyesteramides, de polyarylène-vinylènes, de polylactides, de polyéthercétones, de polyuréthanes, de polysulfones, d'ormocers, de polyacrylates, de silicones, de copolyesters entièrement aromatiques, de poly-N-vinyle-pyrrolidone, de polyhydroxyéthylméthacrylate, de polyméthylméthacrylate, de polyéthylène téréphthalate, de polybutylène téréphthalate, de polyméthacrylonitrile, de polyacrylonitrile, de polyvinylacétate, de néoprène, de Buna N, de polybutadiène, de polytétrafluoroéthène, de cellulose (modifiée ou non-modifiée), d'alginates ou de collagène, de leurs homopolymérisats ou de leurs copolymérisats et/ou de leurs mélanges.

5. Non-tissés en fibres creuses selon au moins l'une des revendications 1 à 3, **caractérisés en ce que** la paroi extérieure des fibres creuses est composée à partir de métaux des groupes Ia, Ib, IIa, IIb, IIIa, IIIb, IVa, IVb, Vb, VIb, VIIb et/ou VIIIb du tableau périodique, respectivement comme métal pur ou alliage.

6. Non-tissés en fibres creuses selon au moins l'une des revendications 1 à 3,
   **caractérisés en ce**
   **que** la paroi extérieure des fibres creuses est composée de verre, de vitrocéramiques, de $SiO_x$, de pérowskite, de céramiques, d'oxydes d'aluminium ou d'oxydes de zirconium.

7. Non-tissés en fibres creuses selon au moins l'une des revendications 1 à 6,
   **caractérisés en ce**
   **que** la paroi extérieure des fibres creuses est composée de plusieurs couches.

8. Non-tissés en fibres creuses selon au moins l'une des revendications 1 à 3,
   **caractérisés par**
   une constante diélectrique inférieure à 4.

9. Procédé de production des non-tissés creux orientés qui présentent des fibres creuses avec une paroi extérieure réalisée à partir de composés anorganiques contenant du métal, de polymères et / ou de métaux.
   **caractérisé en ce**
   **que** premièrement un non-tissé en fibres est réalisé à partir des fibres de préférence orientées directionnellement et composées d'un premier matériau dégradable, que ce non-tissé en fibres orientées reçoit au moins une couche d'un composé anorganique contenant du métal, de polymères et / ou de métaux et qu'ensuite ce premier matériau est dégradé de telle sorte que les fibres creuses du non-tissé en fibres creuses ainsi obtenu avec un diamètre intérieur de 10 nm à 50 $\mu$m sont orientées de préférence directionnellement où les fibres creuses présentent un degré d'orientation fp de 0.2 à 1.

10. Procédé selon la revendication 9,
    **caractérisé en ce**
    **que** le non-tissé en fibres est réalisé à partir des fibres de préférence orientées directionnellement et composées d'un premier matériau dégradable avec l'aide du filage électrostatique ("electrospinning"), en déposant les fibres pendant le procès d'electrospinning sur un cadre composé d'un matériau conducteur situé dans l'espace entre la buse et la contre-électrode.

11. Procédé selon la revendication 10,
    **caractérisé en ce**
    **que** le cadre du matériau conducteur est rectangulaire.

12. Procédé selon la revendication 11,
    **caractérisé en ce**
    **que** le non-tissé en fibres est réalisé à partir des fibres de préférence orientées directionnellement et composées d'un premier matériau dégradable, en fabriquant premièrement un non-tissé en fibres d'un premier matériau dégradable avec l'aide du filage électrostatique ("electrospinning") et en orientant ensuite les fibres de préférence dans le même sens par étirage.

13. Procédé selon la revendication 12,
    **caractérisé en ce**
    **que** le non-tissé en fibres est réalisé à partir des fibres de préférence orientées directionnellement et composées d'un premier matériau dégradable avec l'aide du filage électrostatique ("electrospinning"), en déposant les fibres d'un premier matériau dégradable sur un cylindre conducteur rotatif en tant que contre-électrode.

14. Procédé selon la revendication 13,
    **caractérisé en ce**
    **que** le non-tissé en fibres est réalisé à partir des fibres de préférence orientées directionnellement et composées d'un premier matériau dégradable avec l'aide du filage électrostatique ("electrospinning") avec l'aide d'un champ alternatif à haute tension.

15. Procédé selon la revendication 14,
    **caractérisé en ce**
    **que** le champ alternatif à haute tension est généré mécaniquement.

**16.** Procédé selon la revendication 15,
**caractérisé en ce**
que le champ alternatif à haute tension est généré par le biais d'une électrode rotative crochet.

**17.** Procédé selon la revendication 15,
**caractérisé en ce**
que le champ alternatif à haute tension est généré par le biais d'une électrode rotative à crochet double.

**18.** Procédé selon la revendication 15,
**caractérisé en ce**
que le champ alternatif à haute tension est généré par le biais de deux électrodes en forme de bâton tournant synchroniquement.

**19.** Procédé selon la revendication 15,
**caractérisé en ce**
que le champ alternatif à haute tension est généré électriquement.

**20.** Procédé selon la revendication 19,
**caractérisé en ce**
que le champ alternatif à haute tension est généré par le biais d'une haute tension alternative à deux contre-électrodes.

**21.** Procédé selon la revendication 19,
**caractérisé en ce**
que le champ alternatif à haute tension est généré avec une petite différence de potentiel entre deux contre-électrodes par le biais d'une annulation réciproque de la mise à terre.

**22.** Procédé selon la revendication 19,
**caractérisé en ce**
que le champ alternatif à haute tension entre deux contre-électrodes est généré avec un potentiel de 0 V connecté aux deux contre-électrodes par le biais d'une alternance de la mise à terre et le débranchement.

**23.** Procédé selon la revendication 19,
**caractérisé en ce**
que le champ alternatif à haute tension est généré avec l'aide de deux électrodes intermédiaires qui sont mises à terre de manière alternante.

**24.** Procédé selon au moins l'une des revendications 9 à 23,
**caractérisé en ce**
que le matériau supplémentaire est réalisé à partir de composés inorganiques, de polymères et/ou de métaux.

**25.** Procédé selon l'une des revendications 9 à 24,
**caractérisé en ce**
que le matériau supplémentaire est réalisé à partir de poly(p-xylylène), de polyacrylamide, de polyimides, de polyesters, de polyoléfines, de polycarbonates, de polyamides, de polyéthers, de polyphénylène, de polysilanes, de polysiloxanes, de polybenzimidazoles, de polybenzothiazoles, de polyoxazoles, de polysulfides, de polyesteramides, de polyarylène-vinylènes, de polylactides, de polyéthercétones, de polyuréthanes, de polysulfones, d'ormocers, de polyacrylates, de silicones, de copolyesters entièrement aromatiques, de poly-N-vinyle-pyrrolidone, de polyhydroxyéthylméthacrylate, de polyméthylméthacrylate, de polyéthylène téréphthalate, de polybutylène téréphthalate, de polyméthacrylonitrile, de polyacrylonitrile, de polyvinylacétate, de néoprène, de Buna N, de polybutadiène, de polytétrafluoroéthène, de cellulose (modifiée ou non-modifiée), d'alginates ou de collagène, de leurs homopolymérisats ou de leurs copolymérisats et/ou de leurs mélanges.

**26.** Procédé selon l'une des revendications 9 à 24,
**caractérisé en ce**
que le matériau supplémentaire est composé à partir de métaux des groupes Ia, Ib, IIa, IIb, IIIa, IIIb, IVa, IVb, Vb, VIb, VIIb et/ou VIIIb du tableau périodique, respectivement comme métal pur ou alliage.

**27.** Procédé selon l'une des revendications 9 à 24,
**caractérisé en ce**
**que** le matériau supplémentaire est composé d'oxydes métalliques, de verre, de vitrocéramiques, de SiO$_x$, de pérowskite, de céramiques, d'oxydes d'aluminium, de carbure de silicium, de nitrure de bore, de carbone ou d'oxydes de zirconium.

**28.** Procédé selon l'une des revendications 9 à 25,
**caractérisé en ce**
**que** le matériau supplémentaire est obtenu par polymérisation, polycondensation ou polyaddition d'un ou plusieurs monomères.

**29.** Procédé selon la revendication 28,
**caractérisé en ce**
**que** le matériau supplémentaire est obtenu par homo- ou copolymérisation, par -addition ou -condensation de méthacrylate, de styrène, de sulfonate de styrène, de 1,6-hexaméthylène diisocyanate (HDI), de 4,4'-méthylène biscyclohexyle diisocyanate (HMDI), de 4,4'-méthylène-bis-(benzyl diisocyanate) (MDI), de 1,4-butandiole, d'éthyl-lènediamine, d'éthylène, de styrène, de butadiène, de butène-1, de butène-2, de vinylalcool, d'acrylonitrile, de méthylméthacrylate, de chlorure de vinyle, d'éthylènes fluorés et/ou de téréphthalate.

**30.** Procédé selon au moins l'une des revendications 9 à 29,
**caractérisé en ce**
**que** la dégradation du matériau dégradable se fait suivant un procédé thermique, chimique, biologique, induit par rayons, photochimique, par plasma, ultrason ou extraction avec un solvant.

**31.** Utilisation des non-tissés en fibres creuses orientées selon au moins l'une des revendications 1 à 8 en tant que milieu de séparation ou milieu d'accumulation pour les gaz, les liquides ou les particules en suspension.

**32.** Utilisation des non-tissés en fibres creuses orientées selon l'une des revendications 1 à 8 dans la dialyse, en tant que poumon artificiel, réservoir de protéines, système d'apport ou de libération contrôlée des médicaments ou dans des techniques médicales de séparation.

**33.** Utilisation des non-tissés en fibres creuses orientées selon au moins l'une des revendications 1 à 8 en tant que composant de capteur, microréacteur ou dans la microélectronique comme fil, câble ou capacité.

**34.** Utilisation des non-tissés en fibres creuses orientées selon au moins l'une des revendications 1 à 8 dans la technique de construction superlégère, en tant que matériau composite, matière de remplissage, renforcement mécanique, isolateur de chaleur ou dans l'industrie du vêtement.

**35.** Utilisation des non-tissés en fibres creuses orientées selon au moins l'une des revendications 1 à 8 dans des cellules de combustible, dans des piles ou dans des réactions électrochimiques.

**36.** Utilisation des non-tissés en fibres creuses orientées selon au moins l'une des revendications 1 à 8 dans l'électrophorèse capillaire, dans la microscopie à champ proche ou dans des systèmes catalytiques.

**37.** Utilisation des non-tissés en fibres creuses orientées selon une des revendications 1 à 8 comme diélectrique.

**38.** Utilisation des non-tissés en fibres creuses orientées selon au moins l'une des revendications 1 à 8 comme diélectrique intercouche dans la production de puces.

**39.** Utilisation des non-tissés en fibres creuses orientées selon au moins l'une des revendications 1 à 8 pour la production de non-tissés en couches croisées.

Fig. 1

Fig. 2

a

b

f

**Fig. 3**

a

b

g

h

i

**Fig. 4**

Fig. 5

Fig. 6

Fig. 7

Fig. 8

Fig. 9

Fig. 10

Fig. 11

Fig. 12

Fig. 13

| Statistische Funktion | | |
|---|---|---|
| Gesamtanzahl | | 166 |
| Mittelwert | | -2,1 |
| Standardabweichung [°] | | 24,4 |
| Orientierungsparameter $f_p$ | | 0,74 |

Fig. 14

27

No. 16,17,18,19
PLA/PPX stretchoriented

50 µm

Fig. 15

Fig. 16

Fig. 17

Fig. 18

Fig. 19

Fig. 20

Fig. 21

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- EP 0005035 A1
- EP 0095940 A1
- US 5024789 B2
- WO 9101695 A1
- US 4689186 B2
- DE 10023456 A1
- WO 0109414 A1
- WO 9726225 A1

### In der Beschreibung aufgeführte Nicht-Patentliteratur

- **Kirk-Othmer.** Encyclopedia of Chemical Technology. vol. 17, 303-368
- Ullmann's Encyclopedia of Industrial Chemistry. vol. A17, 565-587
- **Kirk Othmer.** Encyclopedia of Chemical Technology. vol. 13, 312-313
- **J.C. W. Chien ; H. Ringsdorf et al.** *Adv. Mater.,* 1990, vol. 2, 305
- **Kirk-Othmer.** Encyclopedia of Chemical Technology. vol. 13, 317-322
- **L. Huang ; R. A. McMillan et al.** *Macromolecules,* 2000, vol. 33, 2989-2997
- **Sharzad Zarkoob ; Darcell H. Reneker et al.** *Polymer. Prep.,* 1998, vol. 39, 244.245
- **J.-S. Kim ; D. H. Reneker.** *Polym. Eng. Sci.,* 1999, vol. 39, 849-853
- **C. J. Buchko ; L. C. Chen et al.** *Polymer,* 1999, vol. 40, 7397-7407
- **S.H. McGee ; R. L. McCullough.** *J. Appl. Phys.,* 1984, vol. 55, 1394-14039
- **L. A. Chernozantonskii.** *Chem. Phys. Lett.,* 1998, vol. 297, 257
- **S. Demoustier - Champagne et al.** *Europ. Polym. J.,* 1998, vol. 34, 1767
- **E. Evans et al.** *Science,* 1996, vol. 273, 933-995
- Fullerenes and related Structures. Springer Verlag, 1999, 189-234
- **N. Grobert, Nachr.** *Chem. Tech. Lab.,* 1999, vol. 47, 768-776
- **D. H. Reneker ; I. Chun.** *Nanotechn.,* 1996, vol. 7, 216